# EUROPEAN PATENT APPLICATION

(11) **EP 4 848 399 A1**
(43) Date of publication of application: **02.12.2026**
(21) Application number: 24920673.1
(22) Date of filing: 12.08.2024
(51) Int. Cl.: H01M 10/0585, H01M 4/38, H01M 4/583, H01M 4/62, H01M 4/13, H01M 4/40, H01M 4/48

(54) **ALL-SOLID SECONDARY BATTERY**

(30) Priority: 24.01.2024 KR 20240011007
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR); YUN, Jong Hyuk, Yongin-Si Gyeonggi-do 17084 (KR)
(74) Representative: Michalski Hüttermann & Partner mbB
(86) International application number: PCT/KR2024/011996
(87) International publication number: WO 2025/159257

(57) **Abstract**

An all-solid secondary battery includes: a cathode layer; an anode layer; and a solid electrolyte layer between the cathode layer and the anode layer. The cathode layer may include a cathode current collector and a cathode active material layer on one side of the cathode current collector, the cathode active material layer may include a cathode active material and a sulfide-based solid electrolyte, and the anode layer may include an anode current collector, a first anode active material layer between the anode current collector and the solid electrolyte layer, and a second anode active material layer between the first anode active material layer and the anode current collector. The first anode active material layer may include a first anode active material and a fibrous carbon-based material capable of forming an alloy or a compound with lithium, and the first anode active material may include a metal, a metal oxide, an alloy phase, or a combination thereof. The second anode active material layer includes a second anode active material.

## Description

### Technical Field

The present disclosure relates to an all-solid secondary battery.

### Background Art

In recent years, development of batteries having high energy density and safety has been actively carried out in response to industrial demand. For example, lithium batteries are used in various applications such as information devices, communication devices, and automobiles. Safety is also important because cars are related to life.

A lithium battery employing a liquid electrolyte may increase the possibility of fire and/or explosion in a short circuit. An all-solid secondary battery employing a solid electrolyte instead of a liquid electrolyte has been proposed. Solid electrolytes are less likely to ignite than liquid electrolytes.

The all-solid secondary battery may reduce the likelihood of fire or explosion by employing a solid electrolyte instead of a liquid electrolyte. The all-solid battery may provide improved safety.

### Disclosure of Invention

### Technical Problem

An aspect is to provide an all-solid secondary battery having a multilayer structure including a first anode active material layer and a second anode active material, and having a structure in which the first anode active material layer is disposed adjacent to a solid electrolyte layer, thereby suppressing a change in volume during charging and discharging and having improved charging and discharging characteristics.

### Solution of Problem

According to an embodiment, provided is an all-solid secondary battery including:
a cathode layer; an anode layer; and a solid electrolyte layer between the cathode layer and the anode layer,
wherein the cathode layer includes a cathode current collector and a cathode active material layer on one side of the cathode current collector,
the cathode active material layer includes a cathode active material and a sulfide-based solid electrolyte,
the anode layer includes an anode current collector, a first anode active material layer between the anode current collector and the solid electrolyte layer, and
a second anode active material layer between the first anode active material layer and the anode current collector,
the first anode active material layer includes a first anode active material capable of forming an alloy or a compound with lithium and a fibrous carbon-based material,
the first anode active material includes a metal, a metal oxide, an alloy phase, or a combination thereof, and
the second anode active material layer includes a second anode active material, is provided.

### Advantageous Effect of Invention

According to an aspect, provided is an all-solid secondary battery having a multilayer structure that includes a first anode active material layer and a second anode active material layer, wherein the first anode active material layer is disposed adjacent to a solid electrolyte layer, whereby a volume change during charging and discharging is suppressed and improved charge-discharge characteristics are obtained.

### Brief Description of Drawing

FIG. 1 is a cross-sectional view of an all-solid secondary battery according to an embodiment.
FIG. 2 is a cross-sectional view of an all-solid secondary battery according to an embodiment.
FIG. 3 is a cross-sectional view of an all-solid secondary battery according to an embodiment.
FIG. 4 is a cross-sectional view of an all-solid secondary battery according to an embodiment.
FIG. 5 is a cross-sectional view of an all-solid secondary battery according to an embodiment.
FIG. 6 is a cross-sectional view of an all-solid secondary battery according to an embodiment.
FIG. 7 is a cross-sectional view of an all-solid secondary battery according to an embodiment.
FIG. 8 is a cross-sectional view of an all-solid secondary battery according to an embodiment.
FIG. 9 is a cross-sectional view of an all-solid secondary battery according to an embodiment.
FIG. 10 is a cross-sectional view of an all-solid secondary battery according to an embodiment.
FIG. 11 is a cross-sectional view of an all-solid secondary battery according to an embodiment.
FIG. 12 is a cross-sectional view of an all-solid secondary battery according to an embodiment.

### Best Mode for Carrying out the Invention

Unless otherwise defined, all terms (including technical and scientific terms) used in the present disclosure have the same meaning as commonly understood by those skilled in the art to which the present disclosure belongs. In addition, terms as defined in commonly used dictionaries should be interpreted as having a meaning consistent with their meaning within the context of the relevant art and the present disclosure, and should not be interpreted in an idealized or overly formal sense.

Example embodiments are described in this disclosure with reference to cross-sectional views that are schematic illustrations of idealized embodiments. As such, deformation from the shape of the illustration should be expected as a result, for example, such as manufacturing techniques and/or tolerances. Thus, embodiments described in this disclosure should not be construed as limited to the specific shapes of regions as shown in this disclosure, but should include deviations in shapes resulting from, for example, manufacturing. For example, regions shown or described as flat may typically have rough and/or non-linear features. Moreover, the angle shown sharply can be round. Thus, the regions shown in the figures are schematic in nature, and the shapes are not intended to show an exact shape of the region and are not intended to limit the scope of the present claims.

The present inventive concept may be embodied in many different forms and should not be construed as limited to the embodiments set forth in the present disclosure. Embodiments are provided so that the present disclosure can be made thorough and complete, and are provided to fully convey the scope of the present inventive concept to those skilled in the art. Like reference numerals refer to like elements.

It will be understood that when an element is referred to as being "on" another element, it may be directly on the other element or another element may be interposed therebetween. In contrast, when an element is referred to as being "directly on" another element, no element is interposed therebetween.

Terms such as "first," "second," "third," and the like may be used herein to describe various elements, components, regions, layers, and/or zones, but these elements, components, regions, layers, and/or zones should not be limited by these terms. These terms are only used to distinguish one element, component, region, layer, or zone from another element, component, region, layer, or zone. Thus, a first element, component, region, layer, or zone described below may be referred to as a second element, component, region, layer, or zone without departing from the teachings of the present disclosure.

The terminology used herein is for the purpose of describing particular embodiments only and is not intended to limit the present inventive concept. The singular form used herein is intended to include a plurality of forms including "at least one" unless the content clearly indicates otherwise. "At least one" should not be construed as limiting to the singular. As used in this disclosure, the term "and/or" includes any and all combinations of one or more of the list items. The terms "includes" and/or "including" used in the detailed description specify the presence of stated features, regions, integers, steps, operations, elements, and/or components, and do not preclude the presence or addition of one or more other features, regions, integers, steps, operations, elements, components, and/or groups thereof.

Spatially relative terms, such as "beneath," "below," "lower," "above," "upper portion," "upper," and the like, may be used herein to facilitate describing a relationship of one element or feature to another element or feature. It will be understood that the spatially relative terms are intended to encompass different orientations of the device in use or operation in addition to the orientation depicted in the figures. For example, if the device of the figure were to be turned upside down, a component described as "below" or "under" another component or feature would be oriented "above" the other component or feature. Thus, the example term "below" may encompass both directions above and below. The device may be arranged in a different direction (rotated 90 degrees or rotated in a different direction), and spatially relative terms used in the present disclosure may be interpreted accordingly.

"Group" means a group of the Periodic Table of the Elements according to the International Union for Pure and Applied Chemistry (IUPAC) Groups 1-18 group classification system.

In the present disclosure, the "particle diameter" indicates an average diameter when the particle is spherical, and indicates an average major axis length when the particle is aspherical. The particle diameter may be measured using a particle size analyser (PSA). "Particle diameter" is, for example, an average particle diameter. The "average particle diameter" is, for example, D50, which is the median particle diameter.

D50 is a particle size corresponding to a 50% of the cumulative volume calculated from the small-particle-size side in a particle size distribution measured by a laser diffraction method.

D90 is a particle size corresponding to 90% of the cumulative volume calculated from the small-particle-size side in a particle size distribution measured by a laser diffraction method.

D10 is a particle size corresponding to 10% of the cumulative volume calculated from the small-particle-size side in a particle size distribution measured by a laser diffraction method.

In the present disclosure, the "weight average molecular weight" of the polymer may be measured using, for example, gel permeation chromatography (GPC), and is a relative value with respect to a polystyrene standard sample.

In the present disclosure, a "metal" includes both a metal and a metalloid such as silicon and germanium in an elemental state or an ionic state.

In the present disclosure, an "alloy" refers to a mixture of two or more metals.

In the present disclosure, an "electrode active material" refers to an electrode material capable of undergoing lithiation and delithiation.

In the present disclosure, a "cathode active material" refers to a cathode material that may undergo lithiation and delithiation.

In the present disclosure, a "anode active material" refers to an anode material that may undergo lithiation and delithiation.

In the present disclosure, "lithiation" and "lithiating" refer to a process of adding lithium to an electrode active material.

In the present disclosure, "delithiation" and "delithiate" refer to a process of removing lithium from an electrode active material.

In the present disclosure, "charging" and "charge" refer to a process of providing electrochemical energy to a battery.

In the present disclosure, "discharging" and "discharge" refer to a process of removing electrochemical energy from a battery.

In the present disclosure, "cathode" refer to electrodes in which electrochemical reduction and lithiation occur during the discharge process.

In the present disclosure, "anode" refer to electrodes in which electrochemical oxidation and delithiation occur during the discharge process.

While particular embodiments have been described, alternatives, modifications, variations, improvements, and substantial equivalents that are not currently anticipated or foreseeable may occur to applicants or those skilled in the art. It is therefore intended that the appended claims, as filed and as may be amended, include all such alternatives, modifications, variations, improvements, and substantial equivalents.

Hereinafter, an all-solid secondary battery according to exemplary embodiments will be described in more detail.

### [All-Solid Secondary Battery]

An all-solid secondary battery according to an embodiment includes: a cathode layer; an anode layer; and a solid electrolyte layer between the cathode layer and the anode layer, wherein the cathode layer includes a cathode current collector and a cathode active material layer on one side of the cathode current collector, the cathode active material layer includes a cathode active material and a sulfide-based solid electrolyte, the anode layer includes an anode current collector, a first anode active material layer between the anode current collector and the solid electrolyte layer, and a second anode active material layer between the first anode active material layer and the anode current collector, the first anode active material layer includes a first anode active material and a fibrous carbon-based material capable of forming an alloy or a compound with lithium, the first anode active material includes a metal, a metal oxide, an alloy phase, or a combination thereof, and the second anode active material layer includes a second anode active material.

Since the all-solid secondary battery has a multilayer structure including the first anode active material layer and the second anode active material layer, wherein the first anode active material layer is disposed adjacent to the solid electrolyte layer, a volume change during charging and discharging may be suppressed and cycle characteristics may be improved.

Since the all-solid secondary battery includes the first anode active material layer between the solid electrolyte layer and the second anode active material layer, wherein the first anode active material layer has a denser structure than the second anode active material layer, the volume change of the all-solid secondary battery during charging and discharging may be more effectively suppressed. Deterioration of the all-solid secondary battery due to the volume change of the anode layer during charging and discharging of the all-solid secondary battery may be more effectively prevented. As the first anode active material layer is disposed between the solid electrolyte layer and the second anode active material layer, voids on the second anode active material layer may be removed and uniformity of an electrode reaction may be improved. As a result, cycle characteristics during charging and discharging of the all-solid secondary battery may be further improved.

As the first anode active material layer includes the first anode active material including a metal, a metal oxide, or an alloy phase, the initial charge/discharge efficiency of the all-solid secondary battery may be improved during charging and discharging of the all-solid secondary battery. As the all-solid secondary battery has improved initial charge/discharge efficiency, the irreversible capacity of the all-solid secondary battery may be reduced. As a result, the specific capacity of the all-solid secondary battery may be increased, and the energy density of the all-solid secondary battery may be improved.

As the first anode active material layer includes the first anode active material having a metal, a metal oxide, or an alloy phase, a change in volume of the first anode active material layer may be alleviated during charging and discharging of the all-solid secondary battery. As a result, the volume change of the anode layer during charging and discharging of the all-solid secondary battery may be alleviated, and thus, the lifespan characteristics of the all-solid secondary battery may be improved. In addition, since the volume change of the anode layer is alleviated during charging and discharging of the all-solid secondary battery, the thickness of the buffer member for accommodating the volume change of the anode layer may be reduced or the buffer member may be omitted. As a result, the energy density of the all-solid secondary battery may be improved.

The first anode active material layer includes a carbon-based material, and the carbon-based material provides a conductive path between the first anode active material and/or the second anode active material. Accordingly, the carbon-based material may more easily suppress an increase in internal resistance of the first anode active material layer during charging and discharging of the all-solid secondary battery. As a result, an increase in internal resistance of the all-solid secondary battery may be suppressed.

The first anode active material layer may include a carbon-based material, and the carbon-based material may act as a support/buffer between the first anode active material and/or the second anode active material. Therefore, the carbon-based material may more easily mitigate the volume change of the first anode active material layer during charging and discharging of the all-solid secondary battery. As a result, the volume change during charging and discharging of the all-solid secondary battery may be reduced.

The second anode active material layer may be disposed between the first anode active material layer and the anode current collector, and may act as a protective layer of the lithium metal layer precipitated on the anode current collector during charging of the all-solid secondary battery. When the all-solid secondary battery includes the second anode active material layer, the reversibility of the electrode reaction may be improved.

As the second anode active material layer includes the second anode active material, the uniformity of lithium precipitation and/or the lithium precipitation rate may be improved during the charging process of the all-solid secondary battery. As a result, lifespan characteristics and/or high-rate characteristics of the all-solid secondary battery may be improved.

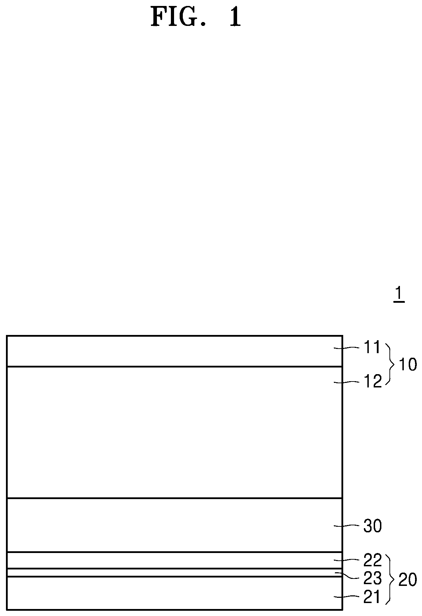

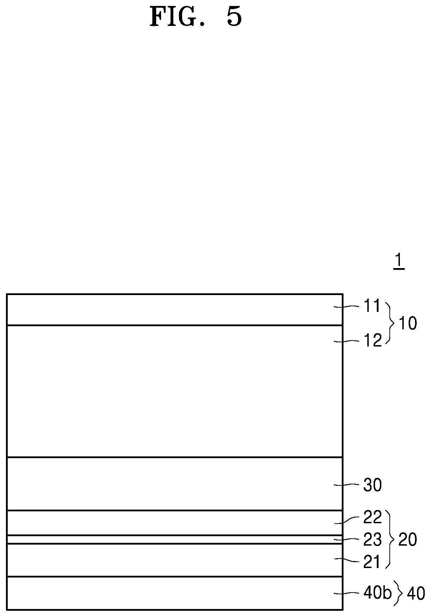

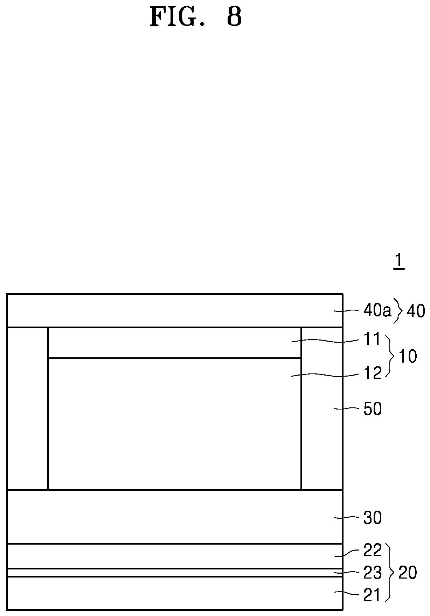

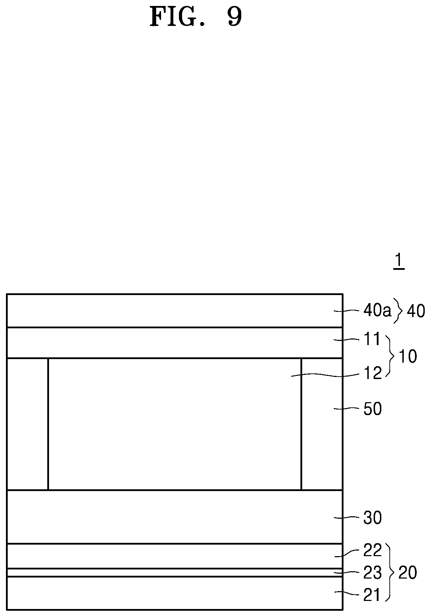

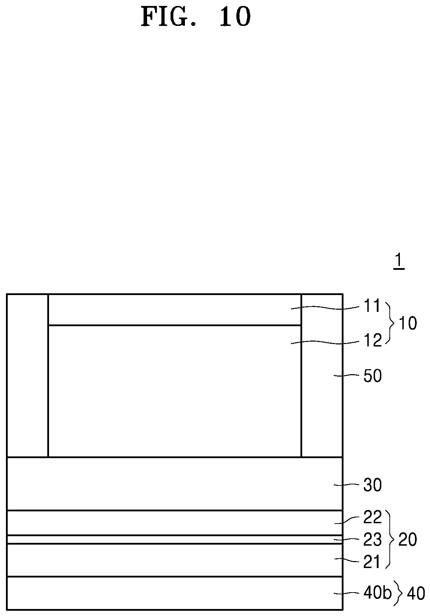

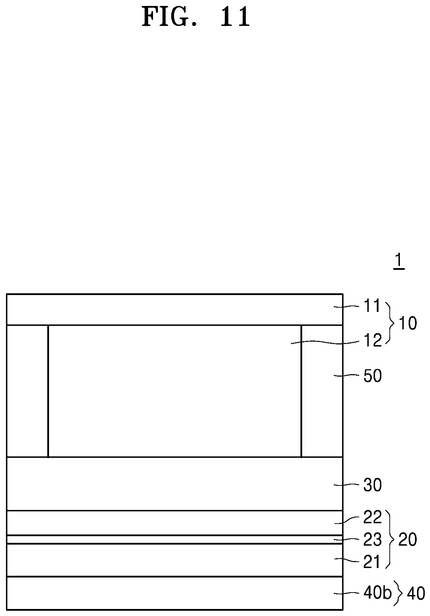

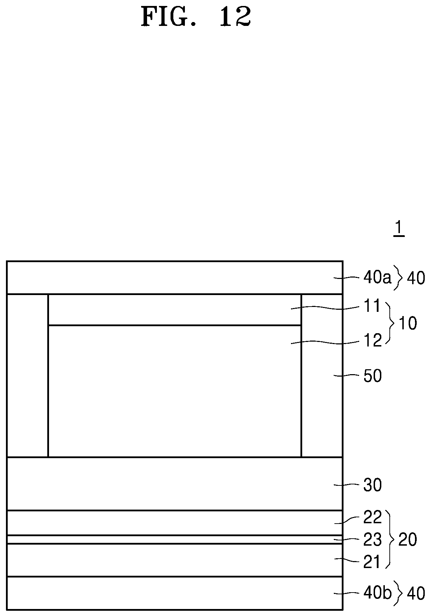

Referring to FIGS. 1 to 12, an all-solid secondary battery 1 includes a cathode layer 10; an anode layer 20; and a solid electrolyte layer 30 between the cathode layer 10 and the anode layer 20. The cathode layer 10 includes a cathode current collector 11 and a cathode active material layer 12 on one side of the cathode current collector 11. The cathode active material layer 12 includes a cathode active material and a sulfide-based solid electrolyte. The anode layer 20 includes an anode current collector 21 and a first anode active material layer 22 between the anode current collector 21 and the solid electrolyte layer 30. The anode layer 21 includes a second anode active material layer 23 between the first anode active material layer 22 and the anode current collector 21. The first anode active material layer 22 may include a first anode active material capable of forming an alloy or a compound with lithium and a fibrous carbon-based material. The first anode active material may include a metal, a metal oxide, an alloy phase, or a combination thereof. The second anode active material layer may include a second anode active material.

### [Anode Layer]

### [First Anode Active Material Layer: First Anode Active Material]

Referring to FIGS. 1 to 12, the anode layer 20 may include a first anode active material layer 22 disposed between the solid electrolyte layer 30 and the anode current collector 21. The first anode active material layer 22 may include a first anode active material capable of forming an alloy or a compound with lithium.

The first anode active material may include a metal, a metal oxide, an alloy phase, or a combination thereof. As the first anode active material includes a metal, a metal oxide, an alloy phase, or a combination thereof, the first anode active material may provide increased initial charge/discharge efficiency and/or increased discharge capacity. The first anode active material may include, for example, an alloy phase, and the alloy phase may include a metal other than lithium.

The first anode active material may include, for example, a metal, and the metal may include, for example, silicon (Si), gold (Au), platinum (Pt), palladium (Pd), silver (Ag), aluminum (Al), bismuth (Bi), tin (Sn), zinc (Zn), or a combination thereof. As the first anode active material includes such a metal, a volume change during charging and discharging of the all-solid secondary battery may be more effectively suppressed, and cycle characteristics of the all-solid secondary battery may be further improved.

The first anode active material may include, for example, a metal oxide, and the metal oxide may include, for example, a silicon oxide represented by SiOₓ (0<x≤2), a tin oxide represented by SnOₓ (0<x≤2), or a combination thereof. Because the first anode active material includes such a metal oxide, a volume change during charging and discharging of the all-solid secondary battery may be suppressed, and cycle characteristics of the all-solid secondary battery may be further improved.

The first anode active material may include, for example, an alloy phase, and the first anode active material including the alloy phase may include, for example, silicon (Si), iron (Fe), and a first metal. The first anode active material may include, for example, an alloy phase including at least two metals selected from silicon (Si), iron (Fe), and a first metal. As the first anode active material including the alloy phase includes silicon, the capacity of the first anode active material may be improved. One silicon atom may bond with 4.4 lithium atoms. Since the first anode active material including the alloy phase includes iron and/or the first metal, a rapid change in volume of the first anode active material may be alleviated, and thus lifespan characteristics of the all-solid secondary battery 1 including the first anode active material may be improved. The first metal may include, for example, copper (Cu), aluminum (Al), titanium (Ti), chromium (Cr), manganese (Mn), cobalt (Co), nickel (Ni), zirconium (Zr), niobium (Nb), molybdenum (Mo), tin (Sn), cerium (Ce), or a combination thereof.

The first anode active material may include, for example, silicon (Si) in an amount of 60 to 90 at%, 65 to 90 at%, or 70 to 90 at% based on a total of 100 at% of the first anode active material. When the first anode active material includes silicon (Si) in these ranges, the first anode active material may provide a high discharge capacity. The first anode active material may include, for example, iron (Fe) in an amount of greater than 0 to 30 at%, 1 to 25 at%, 1 to 20 at%, 1 to 15 at%, or 1 to 10 at% based on a total of 100 at% of the first anode active material. Since the first anode active material includes iron (Fe) in these ranges, an excessive volume change of the first anode active material may be effectively suppressed. The first anode active material may include, for example, the first metal in an amount of greater than 0 to 30 at%, 1 to 25 at%, 1 to 20 at%, 1 to 15 at%, or 1 to 10 at% based on a total of 100 at% of the first anode active material. When the first anode active material includes the first metal in these ranges, an excessive volume change of the first anode active material may be effectively suppressed. The first anode active material may include, for example, copper (Cu) in an amount of greater than 0 % to 20 at%, 1 to 15 at%, or 1 to 10 at% based on a total of 100 at% of the first anode active material. When the first anode active material includes copper in these ranges, an excessive volume change of the first anode active material may be effectively suppressed. The first anode active material may include, for example, aluminum (Al) in an amount of 0 to 10 at%, 0 to 7 at%, or 0 to 5 at% based on a total of 100 at% of the first anode active material. When the first anode active material includes aluminum in these ranges, an excessive volume change of the first anode active material may be effectively suppressed. The first anode active material may include, for example, 60 to 90 at% of silicon (Si), greater than 0 to 30 at% of iron (Fe), and greater than 0 to 10 at% of the first metal. When the first anode active material has such a composition, cycle characteristics of the all-solid secondary battery 1 including the first anode active material may be further improved. The first anode active material may include, for example, 60 to 90 at% of silicon (Si), greater than 0 to 30 at% of iron (Fe), and greater than 0 to 10 at% of copper (Cu). When the first anode active material has such a composition, cycle characteristics of the all-solid secondary battery 1 including the first anode active material may be further improved. The first anode active material may include, for example, 60 to 90 at% of silicon (Si), greater than 0 to 30 at% of iron (Fe), greater than 0 to 10 at% of copper (Cu), and 0 to 10 at% of aluminum. When the first anode active material has such a composition, cycle characteristics of the all-solid secondary battery 1 including the first anode active material may be further improved.

The first anode active material including an alloy phase may include, for example, a silicon single phase, an alloy phase of silicon and iron, an alloy phase of silicon and a first metal, an alloy phase of iron and a first metal, an alloy phase of a plurality of first metals, or a combination thereof. The first anode active material including an alloy phase may further include, for example, a single iron phase, a single first metal phase, or a combination thereof. The volume change of the silicon single phase may become remarkable by, for example, forming an alloy with lithium or forming a compound with lithium. Examples of the alloy phase may include an alloy phase of silicon and iron, an alloy phase of silicon and a first metal, an alloy phase of iron and a first metal, an alloy phase of a plurality of first metals, or a combination thereof, and some or all of these alloy phases may form, for example, an alloy with lithium or a compound with lithium. Alternatively, one or more of an alloy phase of silicon and iron, an alloy phase of silicon and a first metal, an alloy phase of iron and a first metal, a single iron phase, a single first metal phase, and a plurality of first metal alloy phases may suppress a volume change of the first anode active material including an alloy phase by suppressing a volume change of the single silicon phase without binding to lithium, for example. One or more of an alloy phase of silicon and iron, an alloy phase of silicon and a first metal, an alloy phase of iron and a first metal, an iron single phase, a first metal single phase, and a plurality of first metal alloy phases may surround, for example, a part or all of the silicon single phase. For example, a silicon single phase may be uniformly and/or non-uniformly distributed in one or more of an alloy phase of silicon and iron, an alloy phase of silicon and a first metal, an alloy phase of iron and a first metal, and a plurality of first metal alloy phases. Since the first anode active material including an alloy phase has such a structure, a volume change of the first anode active material including an alloy phase during charging and discharging may be more effectively suppressed. The alloy phase of silicon and iron may be represented by, for example, FeₐSi_{b} (where a and b are each independently a natural number of 1 to 100). The alloy phase of silicon and the first metal may be represented by, for example, M1_{c}Si_{d} (where c and d are each a natural number of 1 to 100). The alloy phase of iron and the first metal may be represented by, for example, FeₑM1_{f} (where e and f are each a natural number of 1 to 100). The alloy phase of the plurality of first metals may be represented by, for example, M1'_{g}M1"h (where g and h are each a natural number of 1 to 100, and M1' and M1" are each a metal selected from M1). The alloy phase of silicon and iron may include, for example, FeSi₂, Fe₂Si₅, FeSi, or a combination thereof. The alloy phase of the first metal may be, for example, an alloy phase of copper and aluminum.

The first anode active material including an alloy phase may further include, for example, boron (B), carbon (C), phosphorus (P), or a combination thereof. Since the first anode active material including the alloy phase further includes boron (B), carbon (C), phosphorus (P), or a combination thereof, a volume change of the first anode active material including the alloy phase may be more effectively alleviated. Alternatively, the first anode active material including an alloy phase may not include, for example, boron (B), carbon (C), phosphorus (P), or a combination thereof. Since the first anode active material including the alloy phase does not include boron (B), carbon (C), phosphorus (P), or a combination thereof, the first anode active material including the alloy phase may be simply and easily manufactured.

The first anode active material including an alloy phase may be, for example, a lithiated anode active material. The lithiated anode active material may be, for example, an alloy-based anode active material having the alloy phase in which lithium is additionally substituted. The method of substituting lithium may include sputtering, electrochemical charging, milling, and the like, but is not limited thereto, and any method of substituting lithium for an alloy-based anode active material in the art may be used. The lithiated first anode active material including an alloy phase may include, for example, lithium (Li), silicon (Si), iron (Fe), and a first metal. The lithiated first anode active material including an alloy phase may include, for example, a lithium-silicon alloy phase. The lithiated first anode active material including an alloy phase may include, for example, lithium (Li), silicon (Si), iron (Fe), and a first metal, and may include a lithium-silicon alloy phase. Since the lithiated first anode active material including the alloy phase is a lithiated anode active material, the initial charge/discharge efficiency of the all-solid secondary battery 1 including the first anode active material may be further improved. As a result, as the irreversible capacity of the all-solid secondary battery 1 decreases, the specific capacity of the all-solid secondary battery 1 may increase and the energy density may increase.

The first anode active material layer 22 may include a first anode active material, and the first anode active material may have, for example, a particle shape. The size of the first anode active material having a particle shape may be, for example, 20 µm or less, 15 µm or less, 10 µm or less, or 7 µm or less. The size of the first anode active material having a particle shape may be, for example, 0.1 to 20 µm, 0.5 to 20 µm, 1 to 20 µm, 1 to 15 µm, 1 to 10 µm, or 3 to 7 µm. When the first anode active material has a size in these ranges, the first anode active material may more easily perform reversible absorbing and/or desorbing of lithium during charging and discharging. The size of the first anode active material is, for example, an average particle diameter of the first anode active material. The average particle diameter of the first anode active material is, for example, a median diameter (D50) measured using a laser-type particle size distribution system. The size of the first anode active material may be measured using, for example, a laser-type particle size distribution meter, a scanning electron microscope, or the like.

The aspect ratio of the first anode active material may be, for example, 5 or less, 4 or less, 3 or less, or 2 or less. The aspect ratio of the first anode active material may be, for example, 1 to 5, 1 to 4, 1 to 3, or 1 to 2. When the first anode active material has an aspect ratio in these ranges, the first anode active material may be more uniformly distributed in the first anode active material layer 22. As a result, the non-uniformity of the volume change during charging and discharging of the first anode active material may be suppressed. The aspect ratio of the first anode active material may be measured, for example, with a scanning electron microscope.

### [First Anode Active Material Layer: Fibrous Carbon-Based Material]

The first anode active material layer 22 may include a fibrous carbon-based material in addition to the first anode active material.

The first anode active material layer 22 may include, for example, a mixture of the first anode active material and a fibrous carbon-based material. The first anode active material layer 22 may include, for example, a mixture of a fibrous carbon-based material and one or more first anode active materials selected from the group consisting of silicon (Si), gold (Au), platinum (Pt), palladium (Pd), silver (Ag), aluminum (Al), bismuth (Bi), tin (Sn), and zinc (Zn). A mixing ratio of the fibrous carbon-based material and silicon and the like in the mixture may be, by weight, for example, 99:1 to 1:99, 20:1 to 1:20, 15:1 to 1:15, or 10:1 to 1:10. Alternatively, the mixing ratio of the fibrous carbon-based material to silicon or the like in the mixture may be, by weight, for example, 1:1 to 1:99, 1:1 to 1:20, 1:1 to 1:15, 1:5 to 1:15, 1:7 to 1:12, or 1:8 to 1:10, but is not necessarily limited thereto, and may be selected according to the required characteristics of the all-solid secondary battery 1. When the fibrous carbon-based material and the first anode active material have such a composition, the cycle characteristics of the all-solid secondary battery 1 may be further improved.

The first anode active material layer 22 may include, for example, a mixture of first particles including a first anode active material and second particles including a fibrous carbon-based material. The first particles may be metal particles, metal oxide particles, particles including an alloy phase, or a mixture thereof. The first particle may be, for example, a particle including silicon (Si), gold (Au), platinum (Pt), palladium (Pd), silver (Ag), aluminum (Al), bismuth (Bi), tin (Sn), zinc (Zn), or a combination thereof. The first particle may be, for example, a particle including a silicon oxide represented by SiOₓ (0<x≤2), a tin oxide represented by SnOₓ (0<x≤2), or a combination thereof. The first particle may be, for example, a particle including silicon (Si), iron (Fe), and a first metal, and including an alloy phase of two or more elements selected therefrom. The first metal may include, for example, copper (Cu), titanium (Ti), chromium (Cr), manganese (Mn), cobalt (Co), nickel (Ni), copper (Cu), zirconium (Zr), niobium (Nb), molybdenum (Mo), tin (Sn), cerium (Ce), or a combination thereof. The amount of the second particles may be, for example, 1 to 30 wt%, 1 to 25 wt%, 1 to 20 wt%, 1 to 15 wt%, or 1 to 10 wt%, based on the total weight of the mixture. When the fibrous carbon-based material has an amount in these ranges, for example, the internal resistance of the all-solid secondary battery 1 may be suppressed, thereby providing improved discharge capacity.

The fibrous carbon-based material may be, for example, a conductive carbon-based material. When the fibrous carbon-based material has conductivity, a conductive path may be provided in the first anode active material layer 22. The fibrous carbon-based material may more effectively reduce the internal resistance of the first anode active material layer 22. As a result, cycle characteristics of the all-solid secondary battery 1 are improved. The first anode active material layer 22 may not additionally include other carbon-based conductive materials in addition to the fibrous carbon-based material. Because the first anode active material layer 22 does not include other carbon-based conductive materials in addition to the fibrous carbon-based material, the energy density of the first anode active material layer 22 may be further improved.

The aspect ratio of the fibrous carbon-based material may be, for example, 10 or more, 20 or more, 30 or more, or 50 or more. The aspect ratio of the fibrous carbon-based material may be, for example, 2000 or less, 1000 or less, 500 or less, 200 or less, or 100 or less. The aspect ratio of the fibrous carbon-based material may be, for example, 10 to 2000, 20 to 2000, 30 to 2000, or 50 to 2000. The aspect ratio of the fibrous carbon-based material may be, for example, 10 to 2000, 10 to 1000, 10 to 500, 10 to 200, 10 to 100, 10 to 50, or 10 to 20. The aspect ratio of the fibrous carbon-based material may be, for example, a ratio of a length of a major axis of the fibrous carbon-based material, that is, a length of the fibrous carbon-based material, and a length of a minor axis perpendicular to the major axis, that is, a diameter of the fibrous carbon-based material. When the fibrous carbon-based material has an aspect ratio in these ranges, a conductive path of the fibrous carbon-based material in the first anode active material layer 22 may become longer. The fibrous carbon-based material may form a three-dimensional conductive network in the first anode active material layer 22, thereby more effectively reducing the internal resistance of the first anode active material layer 22. As a result, the internal resistance of the all-solid secondary battery 1 is reduced. For example, high-rate characteristics of the all-solid secondary battery 1 may be improved. The aspect ratio of the fibrous carbon-based material may be measured, for example, from scanning electron microscope (SEM) or transmission electron microscope (TEM) images.

The fibrous carbon-based material may include, for example, an amorphous fibrous carbon-based material, a crystalline fibrous carbon-based material, or a combination thereof. Since the fibrous carbon-based material includes an amorphous fibrous carbon-based material, a side reaction between lithium and the fibrous carbon-based material may be more effectively suppressed. As the reversibility of the electrode reaction during charging and discharging of the all-solid secondary battery 1 is improved, the cycle characteristics of the all-solid secondary battery 1 may be improved.

The diameter of the fibrous carbon-based material may be, for example, 50 nm or less, 30 nm or less, 20 nm or less, or 10 nm or less. The diameter of the fibrous carbon-based material may be, for example, 1 nm to 50 nm, 1 nm to 30 nm, or 1 nm to 10 nm. When the fibrous carbon-based material has a diameter in these ranges, the internal resistance of the first anode active material layer 22 may be effectively reduced, and the fibrous carbon-based material may be easily dispersed in a solvent and/or a slurry during the preparation of the first anode active material layer 22.

The length of the fibrous carbon-based material may be, for example, 1000 µm or less, 100 µm or less, 50 µm or less, 10 µm or less, 5 µm or less, 2 µm or less, 1 µm or less, 500 nm or less, or 300 nm or less. The length of the fibrous carbon-based material may be, for example, 100 nm to 1000 µm, 100 nm to 500 µm, 100 nm to 100 µm, 100 nm to 50 µm, 100 nm to 10 µm, 100 nm to 5 µm, 100 nm to 2 µm, 100 nm to 1 µm, 100 nm to 500 nm, or 100 nm to 300 nm. The length of the fibrous carbon-based material may be, for example, 500 nm to 1000 µm, 500 nm to 500 µm, 500 nm to 100 µm, 500 nm to 50 µm, 500 nm to 10 µm, 1 µm to 10 µm, or 2 µm to 8 µm. As the length of the fibrous carbon-based material increases, the internal resistance of the electrode may decrease.

The fibrous carbon-based material may include, for example, a fibrous carbon nanostructure. The fibrous carbon nanostructure may include, for example, a carbon nanofiber, a carbon nanotube, a carbon nanobelt, or a combination thereof.

The carbon nanotube may include, for example, a carbon nanotube primary structure, a carbon nanotube secondary structure formed by aggregating a plurality of carbon nanotube primary particles, or a combination thereof.

The carbon nanotube primary structure may be one carbon nanotube unit. A carbon nanotube unit has a graphite sheet in the form of a cylinder having a nano-sized diameter, and has an sp2 bonding structure. Depending on the angle and structure at which the graphite surface is bent, the characteristics of the conductor or the characteristics of the semiconductor may be exhibited. The carbon nanotube units may be classified into single-walled carbon nanotubes (SWCNT), double-walled carbon nanotubes (DWCNT), multi-walled carbon nanotubes (MWCNT), and the like according to the number of layers forming the wall. As the wall thickness of the carbon nanotube unit decreases, the resistance decreases.

The carbon nanotube primary structure may include, for example, a SWCNT, a DWCNT, and a MWCNT, or a combination thereof. The diameter of the carbon nanotube primary structure may be, for example, 1 nm or more or 2 nm or more. The diameter of the carbon nanotube primary structure may be, for example, 20 nm or less or 10 nm or less. The diameter of the carbon nanotube primary structure may be, for example, 1 nm to 20 nm, 1 nm to 15 nm, or 1 nm to 10 nm. The length of the carbon nanotube primary structure may be, for example, 100 nm or more or 200 nm or more. The length of the carbon nanotube primary structure may be, for example, 2 µm or less, 1 µm or less, 500 nm or less, or 300 nm or less. The length of the carbon nanotube primary structure may be, for example, 100 nm to 2 µm, 100 nm to 1 µm, 100 nm to 500 nm, 100 nm to 400 nm, 100 nm to 300 nm, or 200 nm to 300 nm. The diameter and length of the carbon nanotube primary structure may be measured from a scanning electron microscope (SEM) or transmission electron microscope (TEM) image. Alternatively, the diameter and/or length of the carbon nanotube primary structure may be measured by laser diffraction.

The carbon nanotube secondary structure is a structure in which the carbon nanotube primary structures are collectively formed in a bundle type or a rope type in whole or in part. The carbon nanotube secondary structure may include, for example, a bundle-type carbon nanotube, a rope-type carbon nanotube, or a combination thereof. The diameter of the carbon nanotube secondary structure may be, for example, 2 nm or more or 3 nm or more. The diameter of the carbon nanotube secondary structure may be, for example, 50 nm or less, 30 nm or less, 20 nm or less, or 10 nm or less. The carbon nanotube secondary structure may have a diameter of, for example, 2 nm to 50 nm, 2 nm to 30 nm, or 2 nm to 20 nm. The length of the carbon nanotube secondary structure may be, for example, 500 nm or more, 700 nm or more, 1 µm or more, or 10 µm or more. The length of the carbon nanotube secondary structure may be, for example, 1000 µm or less, 500 µm or less, or 100 µm or less. The length of the carbon nanotube secondary structure may be, for example, 500 nm to 1000 µm, 500 nm to 500 µm, 500 nm to 200 µm, 500 nm to 100 µm, 500 nm to 50 µm, 500 nm to 10 µm, 1 µm to 10 µm, or 2 µm to 8 µm. The diameter and length of the carbon nanotube secondary structure may be measured from a scanning electron microscope (SEM) image or an optical microscope. Alternatively, the diameter and/or length of the carbon nanotube secondary structure may be measured by laser diffraction.

The carbon nanotube secondary structure may be, for example, dispersed in a solvent or the like to be converted into the carbon nanotube primary structure, and then used for preparing the first anode active material layer 22.

### [First Anode Active Material Layer: Binder]

The first anode active material layer 22 may further include a binder.

Since the binder binds the first anode active material and the fibrous carbon-based material, it is possible to more effectively suppress the disconnection of the conductive path between the first anode active material and the fibrous carbon-based material due to the volume change of the first anode active material during lithium precipitation and/or dissolution during charging and discharging. The non-uniformity of the electrode reaction of the all-solid secondary battery 1 may be suppressed.

The binder may improve a binding force between the first anode active material layer 22 and the solid electrolyte layer 30 and a binding force between the first anode active material layer 22 and the second anode active material layer 23. For example, the binder may improve wettability between the first anode active material layer 22 and the solid electrolyte layer 30 or between the first anode active material layer 22 and the second anode active material layer 23. Accordingly, the binder may more effectively suppress an increase in interfacial resistance due to the formation of voids between the first anode active material layer 22 and the solid electrolyte layer 30 or between the first anode active material layer 22 and the second anode active material layer 23. Cycle characteristics of the all-solid secondary battery 1 may be improved.

The binder may be, for example, a polymer binder. The binder included in the first anode active material layer 22 may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not limited thereto, and any material used as a binder in the art may be used. The binder may include a single binder or a plurality of different binders. The binder may include, for example, a fluorine-based binder.

When the first anode active material layer 22 includes the binder, the first anode active material layer 22 may be stabilized on the solid electrolyte layer 30. In addition, cracks in the first anode active material layer 22 may be suppressed despite a change in volume and/or relative position of the first anode active material layer 22 during charging and discharging. For example, when the first anode active material layer 22 does not include a binder, the first anode active material layer 22 may be easily separated from the solid electrolyte layer 30. As the first anode active material layer 22 is separated from the solid electrolyte layer 30, the possibility of an internal short circuit due to the growth of lithium dendrites in a separated portion between the first anode active material layer 22 and the solid electrolyte layer 30 increases. The first anode active material layer 22 may be formed by, for example, coating a slurry in which materials constituting the first anode active material layer 22 are dispersed on a laminate of the anode current collector 21 and the second anode active material layer 23, and drying the slurry. By including the binder in the first anode active material layer 22, the first anode active material and the fibrous carbon-based material may be stably dispersed in the slurry. For example, when the slurry is applied on the anode current collector 21 by a screen printing method, it is possible to suppress the clogging of the screen (e.g., clogging by aggregates of the anode active material).

An amount of the binder may be in a range of 0.1 to 20 parts by weight, 0.1 to 15 parts by weight, 1 to 10 parts by weight, or 5 to 10 parts by weight, based on 100 parts by weight of the first anode active material. By having the binder content in these ranges, the cycle characteristics of the all-solid secondary battery 1 may be further improved.

### [First Anode Active Material Layer: Second Anode Active Material]

The first anode active material layer 22 may further include a second anode active material in addition to the first anode active material described above. For details of the second anode active material, reference may be made to the description of the second anode active material layer 23 below.

The second anode active material may have, for example, a concentration gradient increasing in a thickness direction of the first anode active material layer 22 and the second anode active material layer 23 from a region adjacent to the solid electrolyte layer 30 to a region adjacent to the anode current collector 21. The second anode active material may have, for example, a concentration gradient that continuously or discontinuously increases in a thickness direction of the first anode active material layer 22 and the second anode active material layer 23 from a region adjacent to the solid electrolyte layer 30 to a region adjacent to the anode current collector 21. For example, the second anode active material may have a concentration gradient that increases from a region of the first anode active material layer 22 adjacent to the solid electrolyte layer 30 to a region of the first anode active material layer 22 adjacent to the second anode active material layer 23, and may have a uniform concentration in the second anode active material layer 23. Alternatively, the second anode active material may have a uniform first concentration in the first anode active material layer 22, and may have a uniform second concentration in the second anode active material layer 23 that is increased compared to the first concentration. When the second anode active material has such a concentration gradient, the cycle characteristics of the all-solid secondary battery 1 may be further improved.

Alternatively, the anode layer 20 may further include a third anode active material layer (not shown) between the first anode active material layer 22 and the second anode active material layer 23.

The third anode active material layer may include, for example, a first anode active material, a second anode active material, and a fibrous carbon-based material. The third anode active material layer may be a mixed layer of the first anode active material layer 22 and the second anode active material layer 23.

The second anode active material may have, for example, a concentration gradient increasing in a thickness direction of the first anode active material layer 22, the third anode active material layer (not shown), and the second anode active material layer 23 from a region adjacent to the solid electrolyte layer 30 to a region adjacent to the anode current collector 21. The second anode active material may have, for example, a concentration gradient that continuously or discontinuously increases in a thickness direction of the first anode active material layer 22, the second anode active material layer (not shown), and the second anode active material layer 23 from a region adjacent to the solid electrolyte layer 30 to a region adjacent to the anode current collector 21. For example, the second anode active material may have a concentration gradient increasing from a region adjacent to the solid electrolyte layer 30 of the third anode active material layer (not shown) to a region adjacent to the second anode active material layer 23, and may have a uniform concentration in the second anode active material layer 23. Alternatively, the second anode active material may have a uniform third concentration in the third anode active material layer (not shown), and may have a uniform fourth concentration in the second anode active material layer 23 that is increased compared to the third concentration. When the second anode active material has such a concentration gradient, the cycle characteristics of the all-solid secondary battery 1 may be further improved.

### [First Anode Active Material Layer: Other Additives]

The first anode active material layer 22 may further include an additive used in the all-solid secondary battery 1 in the related art, for example, a filler, a coating agent, a dispersant, an ion conductive auxiliary agent, and the like.

The first anode active material layer 22 may have a thickness of, for example, 1 to 200 µm, 1 to 100 µm, 5 to 80 µm, 10 to 60 µm, or 20 µm to 60 µm. When the thickness of the first anode active material layer 22 is excessively small, it may be difficult to improve the cycle characteristics of the all-solid secondary battery 1 by increasing a volume change during charging and discharging of the all-solid secondary battery 1. When the thickness of the first anode active material layer 22 is excessively increased, the energy density of the all-solid secondary battery 1 may decrease, and the internal resistance of the all-solid secondary battery 1 by the first anode active material layer 22 may increase, and thus, it may be difficult to improve the cycle characteristics of the all-solid secondary battery 1.

### [Second Anode Active Material Layer: Second Anode Active Material]

Referring to FIGS. 1 to 12, the anode layer 20 may include a second anode active material layer 23 disposed between the first anode active material layer 22 and the anode current collector 21. The second anode active material layer 23 mayinclude a second anode active material.

The second anode active material may be, for example, an anode material capable of forming an alloy with lithium or an anode material capable of forming a compound with lithium. The second anode active material is distinguished from the first anode active material. The size of the second anode active material may be, for example, smaller than the size of the first anode active material. The size of the second anode active material may be, for example, 60% or less, 40% or less, 20% or less, or 10% or less of the size of the first anode active material.

The second anode active material layer 23 may include a second anode active material, and the second anode active material may have, for example, a particle shape. A size of the second anode active material having a particle shape may be, for example, less than 1 µm, less than or equal to 500 nm, less than or equal to 300 nm, or less than or equal to 100 nm. The size of the second anode active material having a particle shape may be, for example, 10 nm to less than 1 µm, 10 nm to 900 nm, 10 to 700 nm, 10 nm to 500 nm, 10 nm to 300 nm, 10 nm to 200 nm, or 10 nm to 100 nm. When the second anode active material has a size in these ranges, the second anode active material may more easily perform reversible absorbing and/or desorbing of lithium during charging and discharging. The size of the second anode active material may be, for example, an average particle diameter of the second anode active material. The average particle diameter of the second anode active material may be, for example, a median diameter (D50) measured using a laser-type particle size distribution system.

The aspect ratio of the second anode active material may be, for example, 5 or less, 4 or less, 3 or less, or 2 or less. The aspect ratio of the second anode active material may be, for example, 1 to 5, 1 to 4, 1 to 3, or 1 to 2. When the second anode active material has an aspect ratio in this range, the second anode active material may be more uniformly distributed in the second anode active material layer 23. As a result, the non-uniformity of the volume change during charging and discharging of the second anode active material may be suppressed. The aspect ratio of the second anode active material may be measured, for example, with a scanning electron microscope.

The second anode active material included in the second anode active material layer 23 may include, for example, a carbon-based anode active material, a second metal-based anode active material distinct from the first anode active material, or a combination thereof.

The carbon-based anode active material may include, for example, amorphous carbon, crystalline carbon, porous carbon, or a combination thereof.

The carbon-based anode active material may be, in particular, amorphous carbon. The amorphous carbon may be, for example, carbon black (CB), acetylene black (AB), furnace black (FB), Ketjen Black (KB), graphene, or the like, but is not limited thereto, and may be any one of various materials that are classified as amorphous carbon in the art. Amorphous carbon is carbon that does not have crystallinity or has very low crystallinity, and is distinguished from crystalline carbon or graphite-based carbon.

The carbon-based anode active material may be, for example, porous carbon. The porous carbon may have a pore volume of, for example, 0.1 cc/g to 10.0 cc/g, 0.5 cc/g to 5 cc/g, or 0.1 cc/g to 1 cc/g. The average pore diameter of the porous carbon may be, for example, 1 nm to 50 nm, 1 nm to 30 nm, or 1 nm to 10 nm. The BET specific surface area of the porous carbon may be, for example, 100 m2/g to 3000 m2/g. The pore volume, average pore diameter, and BET specific surface area may be measured, for example, by a nitrogen gas adsorption method.

The second metal-based anode active material may include one or more selected from the group consisting of gold (Au), platinum (Pt), palladium (Pd), silver (Ag), aluminum (Al), bismuth (Bi), tin (Sn), and zinc (Zn), but is not limited thereto, and any suitable material used as a metal anode active material or a metalloid anode active material forming an alloy or a compound with lithium in the art may be used. For example, since nickel (Ni) does not form an alloy with lithium, nickel (Ni) is not a second metal-based anode active material.

The second anode active material layer 23 may include one kind of second anode active material among the second anode active materials, or may include a mixture of a plurality of different second anode active materials. For example, the second anode active material layer 23 may include amorphous carbon alone, or may include one or more selected from the group consisting of gold (Au), platinum (Pt), palladium (Pd), silver (Ag), aluminum (Al), bismuth (Bi), tin (Sn), and zinc (Zn). Alternatively, the second anode active material layer 23 may include a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of the amorphous carbon and the mixture of gold and the like may be, for example, 99:1 to 1:99, 10:1 to 1:2, 5:1 to 1:1, or 4:1 to 2:1 as a weight ratio, but is not necessarily limited to this range, and is selected according to the required characteristics of the all-solid secondary battery 1. When the second anode active material has such a composition, the cycle characteristics of the all-solid secondary battery 1 may be further improved.

The second anode active material layer 23 may include a second anode active material, and the second anode active material may include, for example, a mixture of first particles including amorphous carbon and second particles including a second metal-based anode active material. The second particle may include, for example, gold (Au), platinum (Pt), palladium (Pd), silver (Ag), aluminum (Al), bismuth (Bi), tin (Sn), zinc (Zn), or the like. The amount of the second particles is 1 to 99 wt%, 1 to 60 wt%, 8 to 60 wt%, 10 to 50 wt%, 15 to 40 wt%, or 20 to 30 wt%, based on the total weight of the mixture. When The amount of the second particles is within these ranges, for example, cycle characteristics of the all-solid secondary battery 1 may be further improved.

Alternatively, the second anode active material layer 23 may include a second anode active material, and the second anode active material may include, for example, a composite anode active material. The composite anode active material may include, for example, a carbon-based support and a third metal-based anode active material supported on the carbon-based support. When the composite anode active material has such a structure, localization of the third metal-based anode active material in the first anode active material layer 22 may be prevented or reduced, and a uniform distribution may be obtained. As a result, cycle characteristics of the all-solid secondary battery 1 including the first anode active material layer 22 may be further improved.

The third metal-based anode active material supported on the carbon-based support may include, for example, a metal, a metal oxide, a composite of a metal and a metal oxide, or a combination thereof. The metal may include, for example, gold (Au), platinum (Pt), palladium (Pd), silver (Ag), aluminum (Al), bismuth (Bi), tin (Sn), tellurium (Te), zinc (Zn), or the like. The metal oxide may include, for example, gold (Au) oxide, platinum (Pt) oxide, palladium (Pd) oxide, silver (Ag) oxide, aluminum (Al) oxide, bismuth (Bi) oxide, tin (Sn) oxide, tellurium (Te) oxide, zinc (Zn) oxide, and the like. The metal oxide may include, for example, AuₓO_{y} (0<x≤2, 0<y≤3), PtₓO_{y} (0<x≤1, 0<y≤2), PdₓO_{y} (0<x≤1, 0<y≤1), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination thereof.

The carbon-based support may be, for example, amorphous carbon. The amorphous carbon may be, for example, carbon black (CB), acetylene black (AB), furnace black (FB), Ketjen Black (KB), graphene activated carbon, or the like, but is not limited thereto, and any material that is classified as an amorphous carbon in the art may be used. Amorphous carbon is carbon that does not have crystallinity or has very low crystallinity, and is distinguished from crystalline carbon or graphite-based carbon.

The composite anode active material may have, for example, a particle shape. The particle diameter of the composite anode active material having a particle shape may be, for example, 10 nm to 2 µm, 10 nm to 1 µm, 10 nm to 500 nm, 10 nm to 200 nm, or 10 nm to 100nm. Since the composite anode active material has a particle diameter within these ranges, reversible absorbing and/or desorbing of lithium may be more easily performed during charging and discharging. The third metal-based anode active material supported on the carbon-based support may have, for example, a particle shape. The particle diameter of the third metal-based anode active material may be, for example, about 1 nm to about 200 nm, about 1 nm to about 150 nm, about 5 nm to about 100 nm, or about 10 nm to about 50 nm. The carbon-based support may have, for example, a particle form. The particle diameter of the carbon-based support may be, for example, 10 nm to 2 µm, 10 nm to 1 µm, 10 nm to 500 nm, 10 nm to 200 nm, or 10 nm to 100 nm. When the carbon-based support has a particle diameter within these ranges, the carbon-based support may be more uniformly disposed in the first anode active material layer. The carbon-based support may be, for example, nanoparticles having a particle diameter of 500 nm or less. The particle diameter of the composite anode active material, the particle diameter of the third metal-based anode active material, and the particle diameter of the carbon-based support may be, for example, an average particle diameter. The average particle diameter may be, for example, a median diameter (D50) measured using a laser-type particle size distribution meter. Alternatively, the average particle diameter may be determined automatically using software from electron microscope images, or manually.

The size of the second anode active material included in the second anode active material layer 23 may be, for example, less than the length of the fibrous carbon-based material included in the first anode active material layer 22. A ratio of the size of the second anode active material to the length of the fibrous carbon-based material may be, for example, 1:10 to 1:2000, 1:10 to 1:1000, 1:10 to 1:500, 1:10 to 1:200, 1:10 to 1:100, 1:10 to 1:50, or 1:10 to 1:20. When the ratio of the size of the second anode active material to the length of the fibrous carbon-based material is within these ranges, for example, cycle characteristics of the all-solid secondary battery 1 may be further improved.

### [Second Anode Active Material Layer: Binder]

The second anode active material layer 23 may further include a binder.

Since the binder binds the second anode active material, it is possible to more effectively suppress the disconnection of the conductive path between the second anode active materials due to the volume change of the second anode active material during the precipitation and/or dissolution of lithium during charging and discharging. The non-uniformity of the electrode reaction of the all-solid secondary battery 1 may be suppressed.

The binder may improve a binding force between the second anode active material layer 23 and the first anode active material layer 22 and a binding force between the second anode active material layer 23 and the anode current collector 21. For example, the binder may improve wettability between the second anode active material layer 23 and the first anode active material layer 22 or between the second anode active material layer 23 and the anode current collector 21. Accordingly, the binder may more effectively suppress an increase in interfacial resistance due to the formation of voids between the second anode active material layer 23 and the first anode active material layer 22 or between the second anode active material layer 23 and the anode current collector 21. Cycle characteristics of the all-solid secondary battery 1 may be improved.

The binder may be, for example, a polymer binder. The binder included in the second anode active material layer 23 may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not limited thereto, and may be any suitable binder used in the art. The binder may include a single binder or a plurality of different binders. The binder may include, for example, a fluorine-based binder.

When the second anode active material layer 23 includes the binder, the second anode active material layer 23 may be stabilized on the anode current collector 21. In addition, cracks in the second anode active material layer 23 may be suppressed despite a change in volume and/or relative position of the second anode active material layer 23 during charging and discharging. For example, when the second anode active material layer 23 does not include a binder, the second anode active material layer 23 may be easily separated from the anode current collector 21. As the second anode active material layer 23 is separated from the anode current collector 21, the possibility of an internal short circuit due to the growth of lithium dendrites in the separated portion between the second anode active material layer 23 and the anode current collector 21 increases. The second anode active material layer 23 may be formed by, for example, coating a slurry in which materials constituting the second anode active material layer 23 are dispersed on the anode current collector 21 and drying the slurry. By including the binder in the second anode active material layer 23, the second anode active material may be stably dispersed in the slurry. For example, when the slurry is applied on the anode current collector 21 by a screen printing method, it is possible to suppress the clogging of the screen (e.g., clogging by aggregates of the anode active material).

An amount of the binder may be in a range of about 0.1 parts by weight to about 20 parts by weight, about 0.1 parts by weight to about 15 parts by weight, about 1 part by weight to about 10 parts by weight, or about 5 parts by weight to about 10 parts by weight, based on 100 parts by weight of the second anode active material. By having the binder content in these ranges, the cycle characteristics of the all-solid secondary battery 1 may be further improved.

### [Anode Layer: Second Anode Active Material Layer]

Referring to FIGS. 1 to 12, the cathode layer 10 may include a cathode active material layer 12, and the anode layer 20 may include the first anode active material layer 22 and the second anode active material layer 23.

The initial charge capacity (B) of the second anode active material layer 23 may be, for example, about 45% or less, about 40% or less, about 30% or less, about 20% or less, or about 10% or less of the initial charge capacity (A) of the cathode active material layer 12.

A ratio (B/A) of the initial charge capacity (B) of the second anode active material layer 23 to the initial charge capacity (A) of the cathode active material layer 12 may be, for example, about 0.01 to about 0.45, about 0.01 to about 0.4, about 0.01 to about 0.3, about 0.01 to about 0.2, about 0.01 to about 0.15, or about 0.01 to about 0.1. The initial charging capacity of the cathode active material layer 12 is determined by charging from the first open circuit voltage (1st open circuit voltage) to a maximum charging voltage with respect to Li/Li+. The initial charging capacity of the second anode active material layer 23 is determined by charging from the second open circuit voltage (2nd open circuit voltage) to 0.01 V with respect to Li/Li+. The maximum charging voltage is determined according to the type of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or Li₂S composite may be determined between 2.5 V and 3.0 V with respect to Li/Li+. For example, the maximum charging voltage of the lithium transition metal oxide may be determined to be in a range of about 3.0 V to about 4.5 V with respect to Li/Li+.

The initial charge capacity (mAh) of the cathode active material layer 12 may be obtained by multiplying the charge specific capacity (mAh/g) of the cathode active material by the mass (g) of the cathode active material in the cathode active material layer 12. When a pluality of types of cathode active materials are used, a charge capacity density×mass value is calculated for each cathode active material, and the sum of these values is the initial charge capacity of the cathode active material layer 12. The initial charge capacity of the second anode active material layer 23 is also calculated in the same manner. The initial charge capacity of the second anode active material layer 23 is obtained by multiplying a charge capacity density (mAh/g) of the anode active material by a mass of the anode active material in the second anode active material layer 23. When a plurality of types of anode active materials are used, a charge capacity density×mass value is calculated for each anode active material, and the sum of these values is the initial charge capacity of the second anode active material layer 23. The charge capacity density of each of the cathode active material and the anode active material may be measured using an all-solid half-cell using lithium metal as a counter electrode. The initial charge capacity of each of the cathode active material layer 12 and the second anode active material layer 23 may be directly measured using an all-solid half-cell at a constant current density, for example, 0.1 mA/cm2. For the cathode, the measurement may be performed for an operating voltage from the first open circuit voltage (OCV) to a maximum charging voltage, e.g., 3.0 V (vs. Li/Li+). For the anode, the measurement may be performed over an operating voltage range from the second open circuit voltage (OCV) to 0.01 V vs. lithium metal (Li/Li⁺). For example, the all-solid-state half-cell having the cathode active material layer may be charged with a constant current of 0.1 mA/cm2 from the first open circuit voltage to 3.0 V. The all-solid-state half-cell having the first anode active material layer may be charged from the second open circuit voltage to 0.01 V at a constant current of 0.1 mA/cm2. The current density during constant current charging may be, for example, 0.2 mA/cm2 or 0.5 mA/cm2. The all-solid-state half-cell having the cathode active material layer may be charged, for example, from the first open-circuit voltage to 2.5 V, 2.0 V, 3.5 V, 4.0 V, or 4.5 V. The maximum charging voltage of the cathode active material layer may be determined by the maximum voltage of a battery that satisfies a safety condition according to JISC8712:2015 of the Japanese Standards Association.

When the initial charge capacity of the second anode active material layer 23 is excessively small, the thickness of the second anode active material layer 23 may be very small, and thus, lithium dendrites formed between the second anode active material layer 23 and the anode current collector 21 may collapse the second anode active material layer 23 during repeated charging and discharging, and thus, it may be difficult to improve the cycle characteristics of the all-solid secondary battery 1. When the charge capacity of the second anode active material layer 23 is excessively increased, the energy density of the all-solid secondary battery 1 may decrease, and the internal resistance of the all-solid secondary battery 1 caused by the second anode active material layer 23 may increase, and thus, it may be difficult to improve the cycle characteristics of the all-solid secondary battery 1.

The thickness of the second anode active material layer 23 may be, for example, 50% or less, 40% or less, 30% or less, 20% or less, or 10% or less of the thickness of the cathode active material layer 12. The thickness of the second anode active material layer 23 may be, for example, 1 to 50%, 1 to 40%, 1 to 30%, 1 to 20%, or 1 to 10% of the thickness of the cathode active material layer 12.

The thickness of the second anode active material layer 23 may be, for example, less than the thickness of the first anode active material layer 22. The thickness of the second anode active material layer 23 may be, for example, 50% or less, 40% or less, 30% or less, 20% or less, or 10% or less of the thickness of the first anode active material layer 22. The thickness of the second anode active material layer 23 may be, for example, 1% to 50%, 1% to 40%, 1% to 30%, 1% to 20%, or 1% to 10% of the thickness of the first anode active material layer 22.

The thickness of the second anode active material layer 23 may be, for example, 1 to 50 µm, 2 to 40 µm, 3 to 30 µm, 4 to 20 µm, or 5 to 20 µm. The second anode active material layer 23 may have a thickness of, for example, 5 to 50 µm, 10 to 50 µm, 15 to 50 µm, 20 to 50 µm, or 25 to 50 µm. When the thickness of the second anode active material layer 23 is excessively small, lithium dendrites formed between the second anode active material layer 23 and the anode current collector 21 may collapse the second anode active material layer 23, and thus it may be difficult to improve the cycle characteristics of the all-solid secondary battery 1. When the thickness of the second anode active material layer 23 is excessively increased, the energy density of the all-solid secondary battery 1 may decrease, and the internal resistance of the all-solid secondary battery 1 by the second anode active material layer 23 may increase, and thus, it may be difficult to improve the cycle characteristics of the all-solid secondary battery 1. When the thickness of the second anode active material layer 23 decreases, for example, the initial charge capacity of the second anode active material layer 23 also decreases.

### [Anode Layer: Fourth Anode Active Material Layer]

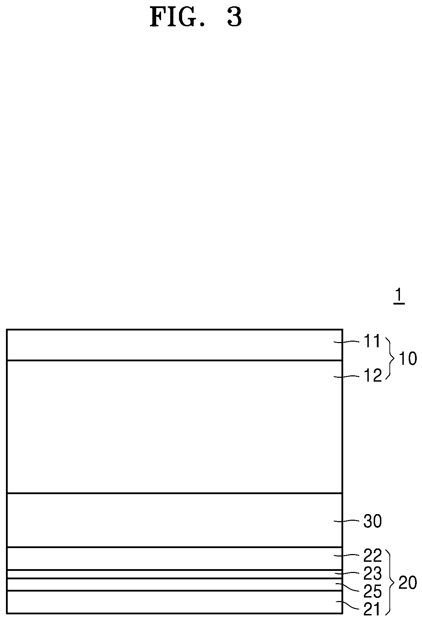

Referring to FIG. 3, the all-solid secondary battery 1 may further include, for example, a fourth anode active material layer 25 disposed between the anode current collector 21 and the second anode active material layer 23, after being charged. The fourth anode active material layer 25 may be a metal layer including lithium or a lithium alloy. The metal layer includes lithium or a lithium alloy. Accordingly, the fourth anode active material layer 25 is a metal layer including lithium and thus serves as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any suitable lithium alloy used in the art may be used. The fourth anode active material layer 25 may include one of these alloys, lithium, or various types of alloys. The fourth anode active material layer 25 may be, for example, a plated layer. For example, the fourth anode active material layer 25 may be precipitated between the second anode active material layer 23 and the anode current collector 21 during the charging process of the all-solid secondary battery 1.

The thickness of the fourth anode active material layer 25 is not particularly limited, but may be, for example, 1 to 200 µm, 1 to 150 µm, 1 to 100 µm, 1 to 50 µm, 1 to 30 µm, 1 to 22 µm, or 1 µm to 10 µm. When the thickness of the fourth anode active material layer 25 is excessively small, it is difficult for the fourth anode active material layer 25 to serve as a lithium reservoir. When the thickness of the fourth anode active material layer 25 is excessively large, the mass and volume of the all-solid secondary battery 1 may increase, and the cycle characteristics of the all-solid secondary battery 1 may rather deteriorate.

The thickness of the fourth anode active material layer 25 may be, for example, less than the thickness of the first anode active material layer 22. The thickness of the fourth anode active material layer 25 may be, for example, about 50% or less, about 40% or less, about 30% or less, about 20% or less, or about 10% or less of the thickness of the first anode active material layer 22. The thickness of the fourth anode active material layer 25 may be, for example, 1% to 50%, 1% to 40%, 1% to 30%, 1% to 20%, or 1% to 10% of the thickness of the first anode active material layer 22. As the thickness of the fourth anode active material layer 25 is smaller than the thickness of the first anode active material layer 22, a change in volume during charging and discharging of the all-solid secondary battery may be suppressed. As a result, deterioration may be suppressed by the volume change of the all-solid secondary battery.

Alternatively, in the all-solid secondary battery 1, the fourth anode active material layer 25 may be disposed between the anode current collector 21 and the second anode active material layer 23, for example, before assembly of the all-solid secondary battery 1. When the fourth anode active material layer 25 is disposed between the anode current collector 21 and the second anode active material layer 23 before assembly of the all-solid secondary battery 1, since the fourth anode active material layer 25 is a metal layer including lithium, the fourth anode active material layer 25 serves as a lithium reservoir. For example, a lithium foil may be disposed between the anode current collector 21 and the second anode active material layer 23 before assembly of the all-solid secondary battery 1.

When the fourth anode active material layer 25 is precipitated by charging after assembly of the all-solid secondary battery 1, the energy density of the all-solid secondary battery 1 may increase because the all-solid secondary battery 1 does not include the fourth anode active material layer 25 during assembly. When the all-solid secondary battery 1 is charged, charging is performed in excess of the charging capacity of the second anode active material layer 23. That is, the second anode active material layer 23 is overcharged. At the beginning of charging, lithium may be absorbed in the second anode active material layer 23. The anode active material included in the second anode active material layer 23 forms an alloy or a compound with lithium ions moved from the cathode 10. When charging is performed in excess of the capacity of the second anode active material layer 23, for example, lithium is precipitated on the rear side of the second anode active material layer 23, that is, between the anode current collector 21 and the second anode active material layer 23, and a metal layer corresponding to the fourth anode active material layer 25 is formed by the precipitated lithium. The fourth anode active material layer 25 may be a metal layer mainly including lithium (i.e., metallic lithium). This result is obtained, for example, when the anode active material included in the second anode active material layer 23 includes a material that forms an alloy or a compound with lithium. During discharging, lithium in the second anode active material layer 23 and the fourth anode active material layer 25, that is, lithium in the metal layer, is ionized and moves toward the cathode 10. Therefore, it is possible to use lithium as an anode active material in the all-solid secondary battery 1. In addition, since the second anode active material layer 23 covers the fourth anode active material layer 25, the second anode active material layer 23 serves as a protective layer of the fourth anode active material layer 25, that is, a metal layer, and simultaneously serves to suppress precipitation growth of lithium dendrites. Therefore, the short circuit and capacity reduction of the all-solid secondary battery 1 may be suppressed, and as a result, cycle characteristics of the all-solid secondary battery 1 may be improved. In addition, when the fourth anode active material layer 25 is disposed by charging after assembly of the all-solid secondary battery 1, the anode 20, that is, the anode current collector 21, the second anode active material layer 23, and the region therebetween are Li-free regions that do not include lithium (Li) in an initial state or a fully discharged state of the all-solid secondary battery 1.

### [Anode Layer: Anode Current Collector]

The anode current collector 21 may include, for example, a material that does not react with lithium, that is, does not form both an alloy and a compound. A material constituting the anode current collector 21 may be, for example, copper (Cu), stainless steel, titanium (Ti), iron (Fe), cobalt (Co), nickel (Ni), or the like, but is not limited thereto, and any material used as an electrode current collector in the art may be used. The anode current collector 21 may include one of the above-described metals, or may include an alloy or a coating material of two or more metals. The anode current collector 21 may be, for example, in the form of a plate or a foil.

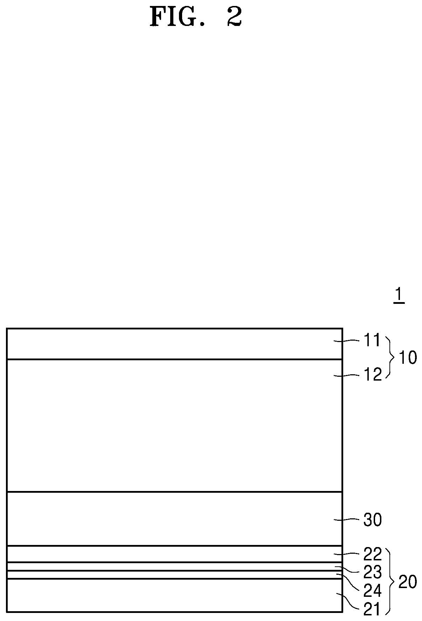

Referring to FIG. 2, the all-solid secondary battery 1 may further include a thin film 24 including an element capable of forming an alloy with lithium on one side of the anode current collector 21. The thin film 24 may be disposed between the anode current collector 21 and the second anode active material layer 23. The thin film 24 may include, for example, an element capable of forming an alloy with lithium. The element capable of forming an alloy with lithium may be, for example, gold, silver, zinc, tin, indium, silicon, aluminum, bismuth, or the like, but is not necessarily limited thereto, and any element capable of forming an alloy with lithium in the art may be used. The thin film 24 is composed of one of these metals or an alloy of several types of metals. As the thin film 24 is disposed on the one side of the anode current collector 21, for example, the deposition form of the fourth anode active material layer 25 deposited between the thin film 24 and the second anode active material layer 23 may be further planarized, and the cycle characteristics of the all-solid secondary battery 1 may be further improved.

The thickness of the thin film 24 is, for example, from 1 nm to 800 nm, from 10 nm to 700 nm, from 50 nm to 600 nm, or from 100 nm to 500 nm. When the thickness of the thin film 24 is less than 1 nm, it may be difficult for the thin film 24 to function. When the thickness of the thin film 24 is excessively large, the thin film 24 itself may absorb lithium to reduce the amount of lithium precipitated at the anode, thereby reducing the energy density of the all-solid secondary battery 1 and deteriorating the cycle characteristics of the all-solid secondary battery 1. The thin film 24 may be disposed on the anode current collector 21 by, for example, a vacuum deposition method, a sputtering method, a plating method, or the like, but is not necessarily limited thereto, and any method capable of forming the thin film 24 in the art may be used.

Although not shown in the drawings, the anode current collector 21 may include, for example, a base film and a metal layer disposed on one or opposite sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes the insulating thermoplastic polymer, when a short circuit occurs, the base film is softened or liquefied to block battery operation, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For further details of the base film, the metal layer, the metal chip, and the lead tab of the anode current collector 21, reference may be made to the description of the above-described cathode current collector 11. Since the anode current collector 21 has such a structure, the weight of the anode may be reduced, and as a result, the energy density of the anode and the lithium battery may be improved.

### [Anode Layer: First Inactive Member]

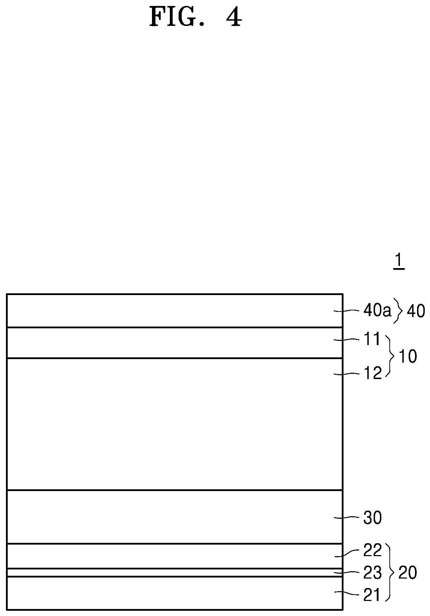

Referring to FIGS. 4 and 5 and FIGS. 8 to 12, the all-solid secondary battery 1 may further include first inactive members 40, 40a, and 40b disposed on one or more of the other side of the anode current collector 21 and the other side of the cathode current collector 11.

The first inactive members 40, 40a, and 40b may not include an electrode active material. The first inactive members 40, 40a, and 40b may be, for example, insulating members.

The first inactive members 40, 40a, and 40b may have conductivity by additionally including a conductive material. The first inactive members 40, 40a, and 40b may be, for example, flame-retardant inactive members by additionally including a flame-retardant material.

The first inactive members 40, 40a, and 40b may be, for example, elastic members. The first inactive members 40, 40a, and 40b may be, for example, porous elastic members. The first inactive members 40, 40a, and 40b may be, for example, elastic members having one or more of porosity, conductivity, and flame retardancy.

The first inactive members 40, 40a, and 40b may provide a buffering function to the all-solid secondary battery 1. The first inactive members 40, 40a, and 40b may provide, for example, stress relaxation and restoring forces. The first inactive members 40, 40a, and 40b may effectively accommodate a change in volume of the all-solid secondary battery 1 and may apply a constant pressure to the all-solid secondary battery 1.

The first inactive members 40, 40a, and 40b may have, for example, a lower elastic modulus than the anode current collector 21. Since the first inactive members 40, 40a, and 40b have an elastic modulus lower than that of the anode current collector 21, a volume change of the anode layer 20 may be more effectively accommodated during charging and discharging of the all-solid secondary battery 1. The first inactive member 50 may effectively alleviate internal stress due to a change in volume of the all-solid secondary battery 1 during charging and discharging of the all-solid secondary battery 1, thereby improving cycle characteristics of the all-solid secondary battery 1.

The first inactive members 40, 40a, and 40b may be disposed on, for example, the anode layer 20 of the all-solid secondary battery 1. When the volume change of the anode layer 20 is relatively greater than that of each of the cathode layer 10 and the solid electrolyte layer 30 during charging and discharging of the all-solid secondary battery 1, the first inactive members 40, 40a, and 40b may be arranged adjacent to the anode layer 20, thereby more effectively accommodating the volume change of the anode layer 20. In addition, as the first inactive members 40, 40a, and 40b apply a constant pressure to the anode layer 20, precipitation of, for example, uniform lithium metal in the anode layer 20 may be induced. Therefore, the generation of defects in the all-solid secondary battery 1 due to non-uniform precipitation of lithium metal may be more effectively prevented.

Alternatively, the first inactive members 40, 40a, and 40b may be disposed, for example, on the cathode layer 10 of the all-solid secondary battery 1. As the first inactive members 40, 40a, and 40b are disposed adjacent to the cathode layer 10, a volume change of the all-solid secondary battery 1 may be more effectively accommodated. In addition, the first inactive members 40, 40a, and 40b may induce, for example, uniform precipitation of lithium metal from the anode layer 20 by applying a constant pressure to the all-solid secondary battery 1. Therefore, the generation of defects in the all-solid secondary battery 1 due to non-uniform precipitation of lithium metal may be more effectively prevented.

The first inactive members 40, 40a, and 40b may include a polymer material, a rubber material, or a combination thereof. Since the first inactive members 40, 40a, and 40b include a polymer material, a rubber material, or a combination thereof, the first inactive members 40, 40a, and 40b may have stress relaxation and restoring force. The polymer material may include, for example, a polyurethane-based polymer, a polyacrylic polymer, a polystyrene-based polymer, a polyester-based polymer, a polyamide-based polymer, a polyolefin-based polymer, or a combination thereof. The polymer material may be, for example, a polymer resin. The polymer material may be, for example, an adhesive resin. The rubber material may include, for example, natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene (CR), halogenated isoprene rubber, halogenated isobutylene copolymer, chloroprene rubber, butyl rubber (IIR), halogenated isobutylene-p-methylstyrene rubber, or a combination thereof. The polyurethane-based polymer may include, for example, polyester-based polyurethane, polyether-based polyurethane, or a combination thereof. The polyacrylic polymer may include, for example, polyacrylate, polyacrylic acid methyl, polymethacrylate, polymethyl methacrylate, or a combination thereof. The polystyrene-based polymer may include, for example, a styrene-ethylene-butylene copolymer (SEB), a styrene-butadiene-styrene copolymer (SBS), a hydrogenated product of SBS (a styrene-ethylene-butylene-styrene copolymer (SEBS)), a styrene-isoprene-styrene copolymer (SIS), a hydrogenated product of SIS (a styrene-ethylene-propylene-styrene copolymer (SEPS)), a styrene-isobutylene-styrene copolymer (SIBS), a styrene-butadiene-styrene-butadiene (SBSB), a styrene-butadiene-styrene-butadiene-styrene (SBSBS), a polystyrene (PS), an acrylonitrile styrene copolymer (AS), an acrylonitrile butadiene styrene copolymer (ABS), or a combination thereof. The polyester polymer may include, for example, polyethylene terephthalate, polybutylene terephthalate, or a combination thereof. The polyamide-based polymer may include, for example, polyamide 6, polyamide 11, polyamide 12, polyamide 66, polyamide 610, or a combination thereof. The polyolefin-based polymer may include, for example, polyethylene, polypropylene, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-1-pentene copolymer, an ethylene-1-butene copolymer, a 1-butene-1-hexene copolymer, a 1-butene-4-methyl-1-pentene, an ethylene-methacrylic acid copolymer, an ethylene-ethyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer (EVA), a propylene-vinyl acetate copolymer, or a combination thereof.

The first inactive members 40, 40a, and 40b may include, for example, a porous foam, a porous sponge, or a combination thereof. The first inactive members 40, 40a, and 40b may include, for example, a porous foam sheet, a porous sponge sheet, or a combination thereof. Since the first inactive members 40, 40a, and 40b have such a shape, porosity and a buffering function may be simultaneously provided. The porous foam may include, for example, a closed cell, an open cell, or a combination thereof. The porous sponge may include, for example, a closed cell, an open cell, or a combination thereof. A closed cell is, for example, a closed pore, which means a cell or pore that is not connected to the surrounding atmosphere. An open cell is, for example, an open pore, and refers to a cell or pore connected to the surrounding atmosphere. The first inactive members 40, 40a, and 40b may include, for example, closed cell porous foam, open cell porous foam, closed cell porous sponge, open cell porous sponge, or a combination thereof. The porous foam may include, for example, a closed cell and an open cell at the same time. The porous sponge may include, for example, a closed cell and an open cell at the same time.

The first inactive members 40, 40a, and 40b may include, for example, a conductive material. The conductive material may be, for example, graphite, carbon black, acetylene black, Ketjen Black, Denka black, a carbon fiber, a carbon nanotube (CNT), graphene, a metal fiber, a metal powder, or the like. The amount of the conductive material included in the first inactive members 40, 40a, and 40b may be, for example, in a range of 1 part by weight to 30 parts by weight, 1 part by weight to 20 parts by weight, 1 part by weight to 15 parts by weight, 1 part by weight to 10 parts by weight, 5 parts by weight to 40 parts by weight, 5 parts by weight to 30 parts by weight, or 5 parts by weight to 35 parts by weight, based on 100 parts by weight of the first inactive members 40, 40a, and 40b. Since the first inactive member 50 has conductivity, the first inactive member 50 may serve as the anode current collector 50.

The first inactive members 40, 40a, 40b may include, for example, a matrix and a filler. The matrix includes, for example, a substrate and a reinforcing material. The matrix includes, for example, a fibrous substrate and a fibrous reinforcing material. The matrix may have elasticity as the matrix includes the fibrous substrate. The fibrous substrate includes, for example, one or more selected from pulp fibers, insulating polymer fibers, and ion-conductive polymer fibers. Since the matrix includes the reinforcing material, the strength of the matrix is improved. A fibrous reinforcing material may be, for example, glass fiber, metal oxide fiber, ceramic fiber, or the like. The fibrous reinforcing material may be, for example, a flame retardant material. The filler may be, for example, a moisture getter and/or a flame retardant. The filler may be, for example, a metal hydroxide having moisture adsorption properties. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof.

The first inactive members 40, 40a, and 40b may have a thickness of, for example, 1 µm to 300 µm, 10 µm to 200 µm, 10 µm to 100 µm, or 10 µm to 50 µm. When the thickness of the first inactive members 40, 40a, and 40b is excessively small, it may be difficult to provide an intended effect, and when the thickness of the first inactive members 40, 40a, and 40b is excessively large, the energy density of the all-solid secondary battery 1 may be reduced. The shape of the first inactive members 40, 40a, and 40b is not particularly limited, and may be selected according to the shape of the all-solid secondary battery 1. The first inactive members 40, 40a, and 40b may have, for example, a sheet shape, a rod shape, or a gasket shape. The first inactive members 40, 40a, and 40b may be omitted, for example.

### [Cathode Layer]

### [Cathode Active Material Layer: Cathode Active Material]

Referring to FIGS. 1 to 12, the cathode layer 10 may include a cathode active material layer 12. The cathode active material layer 12 includes a cathode active material and a sulfide-based solid electrolyte.

The cathode active material included in the cathode active material layer 12 is a cathode active material capable of reversibly absorbing and desorbing lithium ions. The cathode active material may include, for example, an oxide-based cathode active material, a sulfide-based cathode active material, or a combination thereof.

The oxide-based cathode active material may include, for example, a lithium transition metal oxide, a metal oxide, or a combination thereof. The lithium transition metal oxide may include, for example, lithium cobalt oxide, lithium nickel oxide, lithium nickel cobalt oxide, lithium nickel cobalt aluminum oxide, lithium nickel cobalt manganese oxide, lithium manganese oxide, lithium iron phosphate, or a combination thereof. The lithium oxide may include, for example, iron oxide, vanadium oxide, or a combination thereof.

The sulfide-based cathode active material may include, for example, nickel sulfide, copper sulfide, Li₂S, a Li₂S-containing composite, or a combination thereof.

As the oxide-based cathode active material, for example, one or more of composite oxides of lithium and a metal selected from cobalt, manganese, nickel, and a combination thereof may be used. The lithium-containing oxide-based cathode active material may be, for example, a compound represented by any one of the following formulae: LiₐA_{1-b}B'_{b}D₂ (where 0.90 ≤ a ≤ 1, and 0 ≤ b ≤ 0.5 ); LiₐE_{1-b}B'₈O_{2-c}D_{c} (where 0.90 ≤ a ≤ 1, 0 ≤ b ≤ 0.5, 0 ≤ c ≤ 0.05 ); LiE_{2-b}B'_{b}O_{4-c}D_{c} (where 0 ≤ b ≤ 0.5, 0 ≤ c ≤ 0.05); LiₐNi_{1-b-c}Co_{b}B'_{c}D*_{α}* (where 0.90 ≤ a ≤ 1, 0 ≤ b ≤ 0.5, 0 ≤ c ≤ 0.05, 0 < α ≤ 2); LiₐNi_{1-b-c}Co_{b}B'_{c}O_{2-α}F'_{α} (where 0.90 ≤ a ≤ 1, 0 ≤ b ≤ 0.5, 0 ≤ c ≤ 0.05, 0 < α < 2); LiₐNi_{1-b-c}Mn_{b}B'_{c}D_{α} (where 0.90 ≤ a ≤ 1, 0 ≤ b ≤ 0.5, 0 ≤ c ≤ 0.05, 0 < α ≤ 2); LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, 0 < α < 2); LiₐNi_{b}E_{c}G_{d}O₂ (where 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GₑO₂ (where 0.90≤a≤1, 0≤b≤0.9, 0≤c≤0.5, 0≤d≤0.5, 0.001≤e≤0.1); LiₐNiG_{b}O₂ (where 0.90≤a≤1, 0.001≤b≤0.1); LiₐCoG_{b}O₂ (where 0.90≤a≤1, 0.001≤b≤0.1);LiₐMnG_{b}O₂ (where 0.90≤a≤1, 0.001≤b≤0.1);LiₐMn₂G_{b}O₄ (where 0.90≤a≤1, 0.001≤b≤0.1);LiV₂O₅; LiI'O2; LiNiVO₄; Li_{(3-f)}J₂(PO₄)₃ (where 0≤f≤2); Li_{(3-f)}Fe₂(PO₄)₃ (where 0≤f≤2); or LiFePO₄.

In the formulae representing the compounds, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. A compound in which a coating layer is formed on the surface of the above-described compounds may also be used, and a mixture of the above-described compounds and a compound in which a coating layer is formed on the surface may also be used. The coating layer formed on the surface of the above-described compounds includes, for example, a coating element compound of an oxide of a coating element, a hydroxide of a coating element, an oxyhydroxide of a coating element, an oxycarbonate of a coating element, or a hydroxycarbonate of a coating element. The compound constituting such a coating layer is amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect the physical properties of the cathode active material. The coating method may be, for example, spray coating, dipping, or the like. Since the specific coating method is well understood by those skilled in the art, a detailed description thereof will be omitted.

The oxide-based cathode active material may include, for example, a lithium transition metal oxide represented by Formulae 1 to 8:

Formula 1 LiₐNiₓCo_{y}M_{z}O_{2-b}A_{b}

In Formula 1,
1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

   Formula 2 LiNiₓCo_{y}Mn_{z}O₂

   Formula 3 LiNiₓCo_{y}Al_{z}O₂

   In Formulae 2 to 3, 0.8≤x≤0.95, 0≤y≤0.2, 0<z≤0.2, and x+y+z=1,

   Formula 4 LiNiₓCo_{y}Mn_{z}Al_{w}O₂

   In Formula 4, 0.8≤x≤0.95, 0≤y≤0.2, 0<z≤0.2, 0<w≤0.2, and x+y+z+w=1,

   Formula 5 LiₐCoₓM_{y}O_{2-b}A_{b}

   In Formula 5,
   1.0≤a≤1.2, 0≤b≤0.2, 0.9≤x≤1, 0≤y≤0.1, and x+y=1,
   M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
   A may be F, S, Cl, Br, or a combination thereof,

      Formula 6 LiₐNiₓMn_{y}M'_{z}O_{2-b}A_{b}

      In Formula 6,
      1.0≤a≤1.2, 0≤b≤0.2, 0<x≤0.3, 0.5≤y<1, 0<z≤0.3, and x+y+z=1,
      M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
      A may be F, S, Cl, Br, or a combination thereof,

         Formula 7 LiₐM1ₓM2_{y}PO_{4-b}X_{b}
         In Formula 7, 0.90≤a≤1.1, 0≤x≤0.9, 0≤y≤0.5, 0.9<x+y<1.1, and 0≤b≤2,
         M1 may be chromium (Cr), manganese (Mn), iron (Fe), cobalt (Co), nickel (Ni), copper (Cu), zirconium (Zr), or a combination thereof, and
         M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

            Formula 8 LiₐM3_{z}PO₄
            In Formula 8, 0.90≤a≤1.1, 0.9≤z≤1.1, and
            M3 may be chromium (Cr), manganese (Mn), iron (Fe), cobalt (Co), nickel (Ni), copper (Cu), zirconium (Zr), or a combination thereof.

The oxide-based cathode active material may be covered by a coating layer. The coating layer may be any layer known as a coating layer of a cathode active material of an all-solid secondary battery. The coating layer may be, for example, Li₂O-ZrO₂ (LZO) or the like.

The size of the oxide-based cathode active material may be, for example, 0.1 to 30 µm, 0.5 to 20 µm, or 1 to 15 µm. The oxide-based cathode active material may be, for example, single crystal particles or polycrystalline particles.

The sulfide-based cathode active material may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon and a metal nitride, or a combination thereof.

The composite of Li₂S and carbon may include carbon. The carbon may be, for example, any material including a carbon atom and used as a conductive material in the art. The carbon may be, for example, crystalline carbon, amorphous carbon, or a combination thereof. The carbon may be, for example, a sintered product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The porous carbon may include, for example, periodic and regular two-dimensional or three-dimensional pores. The porous carbon may be, for example, carbon black such as Ketjen Black, acetylene black, Denka black, thermal black, or channel black; graphite, activated carbon, or a combination thereof. The form of carbon may be, for example, a particle form, a sheet form, a fibrous form, or the like, but is not limited thereto, and any form used as carbon in the art may be used. The method of preparing a composite of Li₂S and carbon may be a dry method, a wet method, or a combination thereof, but is not limited thereto, and the method of preparing a composite of Li₂S and carbon in the art may be, for example, milling, heat treatment, deposition, or the like, but is not limited thereto, and any method used in the art may be used.

The composite of Li₂S, carbon, and a solid electrolyte may include carbon and a solid electrolyte. For details of the carbon, reference may be made to the description of the above-described composite of Li₂S and carbon. The solid electrolyte may be, for example, any amorphous solid electrolyte used as an ion conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P, and may optionally further include a halogen element. The sulfide-based solid electrolyte may be selected from sulfide-based solid electrolytes used in the solid electrolyte layer. The sulfide-based solid electrolyte may have, for example, an ionic conductivity of 1×10-5 S/cm or more at room temperature. The sulfide-based solid electrolyte may include, for example, one or more selected from Li₃PO₄-Li₂SO₄, Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The oxide-based solid electrolyte may include, for example, Li, O, and a transition metal element, and may optionally further include other elements. The oxide-based solid electrolyte may be, for example, a solid electrolyte having an ionic conductivity of 1×10-5 S/cm or more at room temperature. The oxide-based solid electrolyte may be selected from oxide-based solid electrolytes used in the solid electrolyte layer. The solid electrolyte may be, for example, a mixture of a sulfide-based solid electrolyte and a lithium salt. For example, the solid electrolyte may be a mixture of Li₃PO₄-Li₂SO₄ and a binary lithium salt, or a mixture of Li₃PO₄-Li₂SO₄ and a ternary lithium salt.

The composite of Li₂S and a solid electrolyte may include a solid electrolyte. The solid electrolyte refers to the composite of Li₂S, carbon, and the solid electrolyte described above.

The composite of Li₂S and a lithium salt may include a lithium salt compound. The lithium salt compound does not include, for example, a sulfur (S) atom. The lithium salt compound may be, for example, a binary compound consisting of lithium and one element selected from Groups 13 to 17 of the Periodic Table of the Elements. The binary compound may include, for example, one or more selected from LiF, LiCl, LiBr, LiI, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound consisting of lithium and two elements selected from Groups 13 to 17 of the periodic table of the elements. The ternary compound may include, for example, one or more selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, and Li₅NCl₂ Li₃BN₂. The lithium salt compound may be, in particular, one or more lithium halide compounds selected from LiF, LiCl, LiBr, and LiI. The composite of Li₂S and a solid electrolyte may include a solid electrolyte. The solid electrolyte refers to a solid electrolyte used in a composite of Li₂S, carbon, and a solid electrolyte described above. The composite of Li₂S and the solid electrolyte may include, for example, a composite of Li₂S and one or more lithium salts selected from LiF, LiCl, LiBr, LiI, LiH, Li₂S, Li₂O, Li₂Se, Li₂Te, Li₃N, Li₃P, Li₃As, Li₃Sb, LiI₃, and LiB₃.

The composite of Li₂S, a lithium salt, and carbon may include a lithium salt compound and carbon. For the lithium salt compound, reference may be made to the above-described composite of Li₂S and a lithium salt. For details of the carbon, reference may be made to the description of the above-described composite of Li₂S and carbon.

The composite of Li₂S and metal carbide may include metal carbide. The metal carbide is, for example, a two-dimensional metal carbide. The two-dimensional metal carbide may be, for example, MXene. The two-dimensional metal carbide is represented by, for example, Mₙ₊₁CₙTₓ (M is a transition metal, T is a terminal group, T is O, OH, and/or F, n=1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃T_{x,} or a combination thereof. The surface of the two-dimensional metal carbide may be terminated with O, OH and/or F.

The composite of Li₂S, carbon, and metal carbide may include carbon and metal carbide. For details of the carbon, reference may be made to the description of the above-described composite of Li₂S and carbon. The metal carbide refers to the composite of Li₂S and the metal carbide described above.

The composite of Li₂S and metal nitride includes metal nitride. The metal nitride may be, for example, a two-dimensional metal nitride. The two-dimensional metal nitride may be expressed, for example, as Mₙ₊₁NₙTₓ (M is a transition metal, T is a terminal group, T is O, OH, and/or F, n=1, 2, or 3, and x is the number of terminal groups). The surface of the two-dimensional metal nitride is terminated with O, OH and/or F.

The composite of Li₂S, carbon, and metal nitride includes carbon and metal nitride. For details of the carbon, reference may be made to the description of the above-described composite of Li₂S and carbon. The metal carbide refers to the composite of Li₂S and metal nitride described above.

The Li₂S-containing composite may further include, for example, a second fibrous sulfide-based solid electrolyte (not shown). The Li₂S-containing composite may be a composite of Li₂S and a second fibrous sulfide-based solid electrolyte or a composite of: Li₂S; a second fibrous sulfide-based solid electrolyte; and the above-described carbon, solid electrolyte, lithium salt, metal carbide, or metal nitride. In addition, the cathode active material layer may further include a first fibrous sulfide-based solid electrolyte (not shown).

As the Li₂S-containing composite further includes the second fibrous sulfide-based solid electrolyte, deterioration of the lithium battery may be further suppressed and the cycle characteristics of the lithium battery may be further improved. The size of the second fibrous sulfide-based solid electrolyte may be smaller than the size of the first fibrous sulfide-based solid electrolyte. The length and/or thickness of the second fibrous sulfide-based solid electrolyte may be 50% or less, 40% or less, 30% or less, 20% or less, or 10% or less of the length and/or thickness of the first fibrous sulfide-based solid electrolyte, respectively. The length and/or thickness of the second fibrous sulfide-based solid electrolyte may be 0.1 to 50%, 0.5 to 40%, 1 to 30%, 1 to 20%, or 1 to 10% of the length and/or thickness of the first fibrous sulfide-based solid electrolyte. The second fibrous sulfide-based solid electrolyte may have, for example, the same shape as but a smaller size than the first fibrous sulfide-based solid electrolyte. When the second fibrous sulfide-based solid electrolyte has such a reduced length and/or thickness, the second fibrous sulfide-based solid electrolyte may be easily distributed in the Li₂S-containing composite. When the second fibrous sulfide-based solid electrolyte has such a reduced length and/or thickness, the deterioration of the lithium battery may be further suppressed and the cycle characteristics of the lithium battery may be further improved.

The size of the sulfide-based cathode active material may be, for example, about 0.1 µm to about 50 µm, about 0.5 µm to about 30 µm, about 0.5 µm to about 20 µm, or about 1 µm to about 10 µm. The size of the Li₂S may be, for example, 1 nm to 10 µm, 10 nm to 5 µm, 10 nm to 3 µm, or 10 nm to 1 µm. The size of the Li₂S-containing composite may be, for example, 0.1 to 50 µm, 0.5 to 30 µm, 0.5 to 20 µm, or 1 to 10 µm.

The shape of the cathode active material may be, for example, a particle shape such as a true sphere or an elliptical sphere. The particle diameter of the cathode active material is not particularly limited, and is in a range applicable to a cathode active material of an all-solid secondary battery in the related art. The amount of the cathode active material in the cathode layer 10 is not particularly limited, and is in a range applicable to a cathode layer of an all-solid secondary battery in the related art. The amount of the cathode active material included in the cathode active material layer 12 may be, for example, 10 wt% to 99 wt%, 10 wt% to 90 wt%, 10 wt% to 80 wt%, 10 wt% to 70 wt%, or 10 wt% to 50 wt%, based on the total weight of the cathode active material layer 12.

### [Cathode Active Material Layer: Sulfide-Based Solid Electrolyte]

The cathode active material layer 12 includes a sulfide-based solid electrolyte. The sulfide-based solid electrolyte included in the cathode layer 10 may be the same as or different from the sulfide-based solid electrolyte included in the solid electrolyte layer 30. For details of the solid electrolyte, reference may be made to the description of the solid electrolyte layer 30.

The sulfide-based solid electrolyte included in the cathode active material layer 12 may have a D50 average particle diameter smaller than that of the sulfide-based solid electrolyte included in the solid electrolyte layer 30. For example, the D50 average particle diameter of the sulfide-based solid electrolyte included in the cathode active material layer 12 may be 90% or less, 80% or less, 70% or less, 60% or less, 50% or less, 40% or less, 30% or less, or 20% or less of the D50 average particle diameter of the sulfide-based solid electrolyte included in the solid electrolyte layer 30. The D50 average particle diameter is, for example, a median particle diameter (D50). The median particle diameter (D50) is a particle size corresponding to 50% of the cumulative volume calculated from the small-particle-size side in a particle size distribution measured by, for example, laser diffraction.

The amount of the sulfide-based solid electrolyte included in the cathode active material layer 12 may be, for example, 1 wt% to 40 wt%, 1 wt% to 30 wt%, 1 wt% to 20 wt%, or 1 wt% to 10 wt%, based on the total weight of the cathode active material layer 12.

### [Cathode Active Material Layer: Conductive Material]

The cathode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen Black, carbon fiber, or a combination thereof, but is not limited thereto, and any material used as a carbon-based conductive material in the art may be used. The metal-based conductive material may be a metal powder, a metal fiber, or a combination thereof, but is not limited thereto, and any material used as a metal-based conductive material in the art may be used. The amount of the conductive material included in the cathode active material layer 12 may be, for example, 1 wt% to 30 wt%, 1 wt% to 20 wt%, or 1 wt% to 10 wt% of the total weight of the cathode active material layer 12.

### [Cathode Active Material Layer: Binder]

The cathode active material layer 12 may further include a binder. The binder may be, for example, styrene butadiene rubber (SBR), polytetrafluoroethylene, polyvinylidene fluoride, polyethylene, or the like, but is not limited thereto, and any suitable binder used in the art may be used. The amount of the binder included in the cathode active material layer 12 may be, for example, about 1 wt% to about 10 wt% based on the total weight of the cathode active material layer 12. The binder may be omitted.

### [Cathode Active Material Layer: Other Additives]

The cathode active material layer 12 may further include, for example, additives such as a filler, a coating agent, a dispersant, and an ion conductive auxiliary agent, in addition to the cathode active material, the solid electrolyte, the binder, and the conductive material described above.

As a filler, a coating agent, a dispersant, an ion conductive auxiliary agent, and the like that may be included in the cathode active material layer 12, a known material generally used for an electrode of an all-solid secondary battery may be used.

### [Cathode Layer: Cathode Current Collector]

The cathode current collector 11 may be, for example, a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted. The thickness of the cathode current collector 11 may be, for example, 1 µm to 100 µm, 1 µm to 50 µm, 5 µm to 25 µm, or 10 µm to 20 µm.

The cathode current collector 11 may include, for example, a base film and a metal layer disposed on one or opposite sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes the insulating thermoplastic polymer, when a short circuit occurs, the base film is softened or liquefied to block battery operation, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse and is cut at the time of overcurrent to perform a short circuit prevention function. The limit current and the maximum current may be adjusted by adjusting the thickness of the metal layer. The metal layer may be deposited or deposited on the base film. When the thickness of the metal layer is reduced, a limit current and/or a maximum current of the cathode current collector 11 may be reduced, and thus stability of the lithium battery during a short circuit may be improved. A lead tab may be added on the metal layer for connection with the outside. The lead tab may be welded to the metal layer or the metal layer/base film laminate by ultrasonic welding, laser welding, spot welding, or the like. When the base film and/or the metal layer is melted during welding, the metal layer may be electrically connected to the lead tab. In order to more firmly weld the metal layer and the lead tab, a metal chip may be added between the metal layer and the lead tab. The metal chip may be a thin piece of the same material as the metal of the metal layer. The metal chip may be, for example, a metal foil, a metal mesh, or the like. The metal chip may be, for example, an aluminum foil, a copper foil, a stainless steel (SUS) foil, or the like. The lead tab may be welded to the metal chip/metal layer laminate or the metal chip/metal layer/base film laminate by disposing the metal chip on the metal layer and then welding the metal chip to the lead tab. When the base film, the metal layer, and/or the metal chip are melted during welding, the metal layer or the metal layer/metal chip laminate may be electrically connected to the lead tab. A metal chip and/or a lead tab may be added to a part of the metal layer. The base film may have a thickness of, for example, 1 to 50 µm, 1.5 to 50 µm, 1.5 to 40 µm, or 1 to 30 µm. As the base film has a thickness in this range, the weight of the electrode assembly may be more effectively reduced. The melting point of the base film may be, for example, 100 to 300 °C, 100 to 250 °C or less, or 100 to 200 °C. As the base film has a melting point in this range, the base film may be melted in the process of welding the lead tab and may be easily coupled to the lead tab. A surface treatment such as corona treatment may be performed on the base film in order to improve adhesion between the base film and the metal layer. The thickness of the metal layer may be, for example, 0.01 to 3 µm, 0.1 to 3 µm, 0.1 to 2 µm, or 0.1 to µm. When the metal layer has a thickness within these ranges, stability of the electrode assembly may be secured while maintaining conductivity. The thickness of the metal chip may be, for example, 2 to 10 µm, 2 to 7 µm, or 4 to 6 µm. When the metal chip has a thickness in these ranges, connection between the metal layer and the lead tab may be more easily performed. Since the cathode current collector 11 has such a structure, the weight of the cathode may be reduced, and as a result, the energy density of the cathode and the all-solid secondary battery may be improved.

### [Cathode Layer: First Inactive Member]

Referring to FIGS. 4 and 5 and FIGS. 8 to 12, the all-solid secondary battery 1 may further include first inactive members 40, 40a, and 40b disposed on one or more of the other side of the anode current collector 21 and the other side of the cathode current collector 11.

For more details of the first inactive members 40a, 40a, and 40b, reference may be made to the description of the first inactive members 40, 40a, and 40b of the anode layer.

### [Cathode Layer: Second Inactive Member]

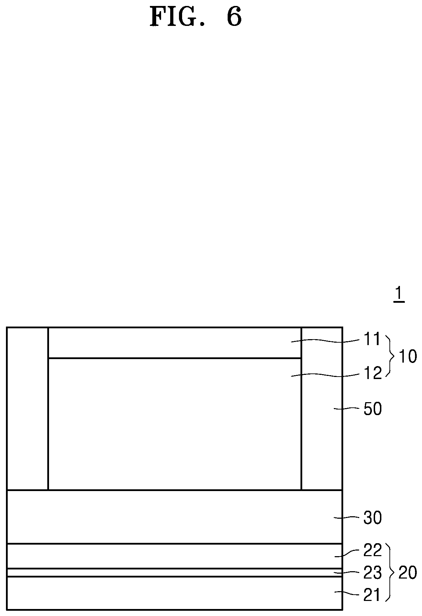

Referring to FIGS. 6 to 12, the cathode layer 10 may include a cathode current collector 11 and a cathode active material layer 12 disposed on one side of the cathode current collector 11. A inactive member 50 may be disposed on a side surface of the cathode layer 10.

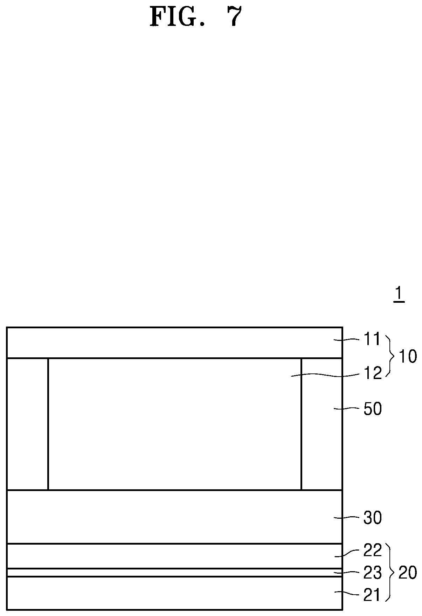

Referring to FIGS. 7, 9, and 11, the second inactive member 50 may be disposed on a side surface of the cathode active material layer 12 and is disposed between the solid electrolyte layer 30 and the cathode current collector 11 facing the solid electrolyte layer 30. The second inactive member 50 may not be disposed on a side surface of the cathode current collector 11. Referring to FIGS. 6, 8, 10, and 12, the second inactive member 50 may be disposed on a side surface of the cathode active material layer 12 and a side surface of the cathode current collector 11. The inclusion of the second inactive member 50 prevents cracking of the solid electrolyte layer 30 during the manufacture of the all-solid secondary battery 1 and/or during charging and discharging, thereby improving the cycle characteristics of the all-solid secondary battery 1. In the all-solid secondary battery 1 that does not include the second inactive member 50, when the all-solid secondary battery 1 is manufactured and/or charged and discharged, a non-uniform pressure is applied to the solid electrolyte layer 30 in contact with the cathode layer 10, and thus cracks may occur in the solid electrolyte layer 30, and accordingly, the possibility of a short circuit due to growth of lithium metal through the cracks may increase.

Referring to FIGS. 6 to 12, in the all-solid secondary battery 1, the thickness of the second inactive member 50 may be, for example, greater than the thickness of the first anode active material layer 22. The thickness of the second inactive member 50 may be greater than the thickness of the solid electrolyte layer 30.

Referring to FIGS. 6 to 12, the second inactive member 50 surrounds the side surface of the cathode layer 10 and contacts the solid electrolyte layer 30. Since the second inactive member 50 surrounds the side surface of the cathode layer 10 and contacts the solid electrolyte layer 30, cracks in the solid electrolyte layer 30, which may occur in a region thereof not in contact with the cathode layer 20 due to a pressure difference during a pressing process, may be effectively suppressed. The second inactive member 50 may surround a side surface of the cathode layer 10 and may be separated from the anode layer 20, for example, the first anode active material layer 22. The second inactive member 50 may surround the side surface of the cathode layer 10, contact the solid electrolyte layer 30, and be separated from the anode layer 20. Therefore, the possibility that a short circuit occurs due to physical contact between the cathode layer 10 and the first anode active material layer 22, or a short circuit occurs due to overcharging of lithium, or the like, is suppressed. As the second inactive member 50 is simultaneously disposed on one side surface of the cathode active material layer 12 and one side surface of the cathode current collector 11, the possibility of a short circuit due to contact between the cathode current collector 11 and the anode layer 20 may be more effectively suppressed.

Referring to FIGS. 6 to 12, the second inactive member 50 may extend from a side surface of the cathode layer 10 to an end portion of the solid electrolyte layer 30. As the second inactive member 50 extends to the end portion of the solid electrolyte layer 30, cracks occurring in the end portion of the solid electrolyte layer 30 may be suppressed. The end portion of the solid electrolyte layer 30 may be an outermost portion in contact with a side surface of the solid electrolyte layer 30. The second inactive member 50 may extend to an outermost portion in contact with a side surface of the solid electrolyte layer 30. The second inactive member 50 may be separated from the anode layer 20, for example, the first anode active material layer 22. The second inactive member 50 may extend to the end portion of the solid electrolyte layer 30, but does not contact the anode layer 20. The second inactive member 50 may fill, for example, a space extending from the side surface of the cathode layer 10 to the end portion of the solid electrolyte layer 30.

The area of the cathode active material layer 12 or the cathode layer 10 may be smaller than the area of the first anode active material layer 22 or the anode layer 20. An area of the cathode active material layer 12 or the cathode layer 10 may be smaller than an area of the solid electrolyte layer 30.

The second inactive member 50 may be, for example, a gasket. As the gasket is used as the second inactive member 50, cracks in the solid electrolyte layer 30 caused by a pressure difference during a pressing process may be effectively suppressed.

The second inactive member 50 may have, for example, a single-layer structure. Alternatively, although not shown in the drawings, the second inactive member 50 may have a multilayer structure. The multilayer structure may have, for example, a two-layer, three-layer, or four-layer structure, and by having the multilayer structure, the physical properties of the second inactive member 50 may be more precisely adjusted.

Although not shown in the drawings, a portion or the entirety of the second inactive member 50 may be disposed to be spaced apart from the side surface of the cathode active material layer 12. Because a portion or the entirety of the second inactive member 50 is spaced apart from the side surface of the cathode active material layer 12, the manufacturing process of the all-solid secondary battery 1 may be facilitated and the manufacturing speed of the all-solid secondary battery 1 may be increased. Because a portion or the entirety of the second inactive member 50 is spaced apart from the side surface of the cathode active material layer 12, a change in volume of the cathode active material layer 12 in the side direction during charging and discharging may be more effectively accommodated, thereby further improving the lifespan characteristics of the all-solid secondary battery 1. A distance between the second inactive member 50 and the side surface of the cathode active material layer 12 may be, for example, 0.1 µm to 10 mm, 1 µm to 1 mm, 1 µm to 500 µm, 1 µm to 100 µm, 1 µm to 50 µm, or 1 µm to 10 µm.

Referring to FIGS. 6 to 12, the second inactive member 50 may be selected from, for example, materials used in the first inactive members 40, 40a, and 40b described above. The second inactive member 50 does not include, for example, an electrode active material. The second inactive member 50 may be, for example, a flame-retardant inactive member, an electron-insulating inactive member, an ion-insulating inactive member, or an elastic inactive member.

### [Solid Electrolyte Layer]

### [Solid Electrolyte Layer: Solid Electrolyte]

Referring to FIGS. 1 to 12, the all-solid secondary battery 1 includes the solid electrolyte layer 30 disposed between the cathode layer 10 and the anode layer 20. The solid electrolyte layer 30 may include, for example, a solid electrolyte, or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, one or more selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be prepared by treating a starting material such as Li₂S and P₂S₅ by a melt quenching method or a mechanical milling method. In addition, after this treatment, heat treatment may be performed. The solid electrolyte may be amorphous, crystalline, or a mixture thereof. In addition, the solid electrolyte may include, for example, at least sulfur (S), phosphorus (P), and lithium (Li) as constituent elements in the above-described sulfide-based solid electrolyte materials. For example, the solid electrolyte may be a material including Li₂S-P₂S₅. When a sulfide-based solid electrolyte material forming a solid electrolyte including Li₂S-P₂S₅ is used, the mixing molar ratio of Li₂S and P₂S₅ may be, for example, in a range of Li₂S:P₂S₅=20:80 to 90:10, 25:75 to 90:10, 30:70 to 70:30, or 40:60 to 60:40.

The sulfide-based solid electrolyte may include, for example, an argyrodite-type solid electrolyte represented by Formula A:

Formula A Li⁺₁₂₋ₙ₋ₓAⁿ⁺X²⁻₆₋ₓY⁻ₓ

wherein A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be, for example, an argyrodite-type compound including one or more selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may be, for example, an argyrodite-type compound including one or more selected from Li₆PS₅Cl, Li₆PS₅Br, and Li₆PS₅I.

The density of the argyrodite-type solid electrolyte may be 1.5 to 2.0 g/cc. Since the argyrodite-type solid electrolyte has a density of 1.5 g/cc or more, the internal resistance of the all-solid secondary battery may be reduced, and penetration of the solid electrolyte layer by Li may be effectively suppressed.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y} Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(where M = Te, Nb, or Zr, and 0≤x≤10), or a combination thereof. The oxide-based solid electrolyte may be manufactured by, for example, a sintering method.

The oxide-based solid electrolyte may be, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte may include, for example, a mixture of a lithium salt and a polymer, or a polymer having an ion-conductive functional group. The polymer solid electrolyte may be, for example, a polymer electrolyte in a solid state at 25 °C and 1 atm. The polymer solid electrolyte may not include, for example, a liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), polymethyl methacrylate (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but is not limited thereto, and any polymer used in a polymer electrolyte in the art may be used. The lithium salt may be any suitable lithium salt that may be used in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each 1 to 20), LiCl, LiI, or a mixture thereof. The polymer included in the polymer solid electrolyte may be, for example, a compound including 10 or more, 20 or more, 50 or more, or 100 or more repeating units. The weight average molecular weight of the polymer contained in the polymer solid electrolyte may be, for example, 1000 Dalton or more, 10,000 Dalton or more, 100,000 Dalton or more, or 1,000,000 Dalton or more.

The gel electrolyte is, for example, a polymer gel electrolyte. The gel electrolyte may have, for example, a gel state without including a polymer.

The polymer gel electrolyte may include, for example, a liquid electrolyte and a polymer, or may include an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte used in the polymer gel electrolyte may be, for example, an ionic liquid, and a mixture of a lithium salt and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in a solid polymer electrolyte. The organic solvent may be selected from organic solvents used in the liquid electrolyte. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, or a mixture thereof. The lithium salt may be selected from lithium salts used in a polymer solid electrolyte. The ionic liquid has a melting point of room temperature or less, consists of only ions, and refers to a salt in a liquid state at room temperature or a room temperature molten salt. The ionic liquid may include, for example, one or more selected from a compound including: a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations, and mixtures thereof; and b) one or more anions selected from BF4⁻, PF6⁻, AsF6⁻, SbF6⁻, AlCl4⁻, HSO4⁻, ClO4⁻, CH3SO3⁻, CF3CO2⁻, Cl⁻, Br⁻, I⁻, BF4⁻, SO4⁻, CF3SO3⁻, (FSO2)2N⁻, (C2F5SO2)2N⁻, (C2F5SO2)(CF3SO2)N⁻, and (CF3SO2)2N⁻. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Solid Electrolyte Layer: Binder]

The solid electrolyte layer 30 may include, for example, a binder. The binder included in the solid electrolyte layer 30 may be, for example, styrene butadiene rubber (SBR), polytetrafluoroethylene, polyvinylidene fluoride, polyethylene, or the like, but is not limited thereto, and any binder used in the art may be used. The binder of the solid electrolyte layer 30 may be the same as or different from the binder included in the cathode active material layer 12 and the anode active material layer 22. The binder may be omitted.

The amount of the binder included in the solid electrolyte layer 30 may be 0.1 to 10 wt%, 0.1 to 5 wt%, 0.1 to 3 wt%, 0.1 to 1 wt%, 0 to 0.5 wt%, or 0 to 0.1 wt% based on the total weight of the solid electrolyte layer 30.

### [Form for Implementation of Invention]

The present inventive concept will be described in more detail with reference to the following examples and comparative examples. However, the examples are intended to illustrate the present creative idea, and the scope of the present creative idea is not limited thereto.

### (Preparation of Sulfide-Based Composite Cathode Active Material)

### Preparation Example 1: Li₂S-LiI-CNF Composite Cathode Active Material

Li₂S and LiI were mixed in a weight ratio of 30:20. The mixture was mechanically milled using a ball mill to prepare a Li₂S-LiI composite. Milling conditions were 25 °C, 510 rpm for 10 hours.

The Li₂S-LiI composite and carbon nanofiber (CNF) were mixed in a weight ratio of 50:10. The mixture was mechanically milled using a ball mill to prepare a Li₂S-LiI-CNF composite. Milling conditions were 25 °C, 510 rpm for 10 hours. A Li₂S-LiI-CNF composite was used as a composite cathode active material.

### (Preparation of All-Solid Secondary Battery)

### Example 1: Elastic Sheet (50 µm)/Cathode Layer (112 µm, NCA)/Solid Electrolyte Layer (30 µm)/First Anode Active Material Layer (27 µm, Si Particles: CNT=9:1)/Second Anode Active Material Layer (7 µm, Ag-C)

### (Fabrication of Cathode Layer)

Li₂O-ZrO₂ (LZO)-coated LiNi₀.₈Co₀.₁₅Al₀.₀₅O₂ (NCA) was prepared as a cathode active material. The LZO-coated cathode active material was prepared according to the method disclosed in Korean Patent Publication No. 10-2016-0064942. As a solid electrolyte, Li₆PS₅Cl (D50=0.5 µm, crystalline), which is an argyrodite-type crystal, was prepared. A polytetrafluoroethylene (PTFE) binder was prepared as a binder. Carbon nanofibers (CNFs) were prepared as a conductive agent. A slurry obtained by mixing such materiasl with a xylene solvent at a weight ratio of cathode active material:solid electrolyte:conductive agent:binder of 84:11:3:2 was molded into a sheet form, and then vacuum-dried at 40 °C for 8 hours to prepare a cathode sheet. The prepared cathode sheet was disposed on a carbon layer of a cathode current collector including an aluminum foil coated with the carbon layer on one side thereof, and was heat-roll-pressed at 85 °C to prepare a cathode layer. The total thickness of the cathode layer was about 112 µm. The thickness of the cathode active material layer was about 92 µm, and the thickness of the carbon-coated aluminum foil was about 20 µm.

### (Measurement of Initial Charge Capacity of Cathode Active Material Layer)

The initial charge capacity of the cathode layer was measured by the half-cell described above. The initial charge capacity of the cathode active material layer was measured by the half-cell.

### (Manufacture of Anode Layer)

A SUS foil having a thickness of 10 µm was prepared as an anode current collector. Silicon (Si) particles having a primary particle diameter of 1 µm were prepared as a first anode active material. As a second anode active material, a mixture of carbon black (CB) having a primary particle diameter of about 30 nm and silver (Ag) particles having an average particle diameter of about 60 nm in a weight ratio of 3:1 was prepared. Carbon nanotubes were prepared as a fibrous carbon-based material. Carbon nanotubes included a carbon nanotube primary structure and a carbon nanotube secondary structure. The carbon nanotube primary structure consists of one carbon nanotube unit. The length of the carbon nanotube unit was 200 nm to 300 nm, and the diameter of the carbon nanotube unit was about 5 to 10 nm. The carbon nanotube secondary structure was formed by agglomeration of a plurality of carbon nanotube units. The length of the carbon nanotube secondary structure was about 5 µm, and the diameter was about 40 nm.

4 g of a mixture of carbon black (CB) and silver (Ag) in a weight ratio of 3:1 was added to a container, and 4 g of an NMP solution including 7 wt% of a PVDF binder (Kureha Corporation #9300) was added thereto to prepare a first mixed solution. A first slurry was prepared by stirring the first mixed solution while adding NMP little by little to the prepared first mixed solution. The prepared first slurry was applied to an SUS substrate using a bar coater, dried in air at 80 °C for 10 minutes, and then vacuum dried at 40 °C for 10 hours to prepare a first laminate.

A mixture of silicon (Si) particles and carbon nanotubes in a weight ratio of 9:1 was placed in a container, and an NMP solution including 7 wt% of a PVDF binder (Kureha # 9300) was added thereto in the same weight as the mixture to prepare a second mixed solution. While adding NMP little by little to the prepared second mixed solution, the mixed solution was stirred to prepare a second slurry. The prepared second slurry was applied on the first laminate using a bar coater, dried in air at 80 °C for 10 minutes, and then vacuum dried at 40 °C for 10 hours to prepare a second laminate.

The surface of the prepared second laminate was planarized by cold roll pressing to prepare an anode layer having a structure of first anode active material layer/second anode active material layer/anode current collector.

The thickness of the first anode active material layer was about 27 µm. The thickness of the second anode active material layer was about 7 µm.

### (Measurement of Initial Charge Capacity of Second Anode Active Material Layer)

An anode having a second anode active material layer/anode current collector structure was separately prepared in the same manner as described above, except that the first anode active material layer was omitted. For the separately prepared anode, the initial charge capacity of the second anode active material layer was measured. The initial charge capacity of the anode was measured by the half-cell described above.

The ratio (B/A) of the initial charge capacity (B) of the second anode active material layer to the initial charge capacity (A) of the cathode active material layer was less than 0.3. The initial charge capacity of the cathode active material layer was determined at a charge from the first open circuit voltage (1st open circuit voltage) to 4.25 V vs. Li/Li+. Initial charge capacities of the cathode layer (i.e., cathode active material layer) and the anode layer (i.e., second anode active material layer) were measured by the half-cell described above, respectively. The initial charge capacity of the second anode active material layer was determined at a charge from the second open circuit voltage ( circuit voltage) to 0.01 V vs.Li/Li+. In Examples 2 to 4 and Reference Examples 1 and 2, the ratio (B/A) of the initial charge capacity (B) of the second anode active material layer to the initial charge capacity (A) of the cathode active material layer, measured under the same conditions as in Example 1, was less than 0.3.

### (Preparation of Solid Electrolyte Layer)

To a Li₆PS₅Cl solid electrolyte (D₅₀=3.0 µm, crystalline), which is an argyrodite-type crystal, 1.5 parts by weight of an acrylic binder based on 98.5 parts by weight of the solid electrolyte was added to prepare a mixture. Octyl acetate was added to the prepared mixture and stirred to prepare a slurry. The prepared slurry was applied on a nonwoven fabric placed on a PET substrate using a bar coater, and dried in air at a temperature of 80 °C for 10 minutes to prepare a laminate. The prepared laminate was vacuum-dried at 80 °C for 2 hours to prepare a solid electrolyte layer.

### (Inactive member: elastic sheet)

A porous polyurethane foam sheet having a thickness of 50 µm was prepared as an elastic sheet.

### (Preparation of All-Solid Secondary Battery)

A laminate was prepared by disposing the solid electrolyte layer on the anode such that the first anode active material layer contacts the solid electrolyte layer, and disposing the cathode on the solid electrolyte layer such that the cathode active material layer contacts the solid electrolyte layer.

The prepared laminate was subjected to plate pressing at 85 °C at a pressure of 500 MPa for 30 minutes. The solid electrolyte layer is sintered by such a pressurized treatment, thereby improving battery characteristics. The sintered solid electrolyte layer had a thickness of about 30 µm. The density of the Li₆PS₅Cl solid electrolyte, which is an argyrodite-type crystal included in the sintered solid electrolyte layer, was 1.6 g/cc. The area of the solid electrolyte layer was the same as the area of the anode. An elastic sheet was additionally disposed on the cathode current collector of the pressed laminate.

A laminate further including an elastic sheet was placed in a pouch and vacuum-sealed to prepare an all-solid secondary battery. A part of the cathode current collector and a part of the anode current collector were extended to the outside of the sealed battery and used as a cathode terminal and an anode terminal.

### Example 2: Elastic Sheet (50 µm)/Cathode Layer (112 µm, NCA)/Solid Electrolyte Layer (30 µm)/First Anode Active Material Layer (27 µm, SiOₓ(0<x<2) Particle: CNT=9:1)/Second Anode Active Material Layer (7 µm, Ag-C)

An all-solid secondary battery was prepared in the same manner as in Example 1, except that silicon oxide SiOₓ (0<x<2) particles were used instead of the silicon (Si) particles as the first anode active material.

### Example 3: Elastic Sheet (50 µm)/Cathode Layer (112 µm, NCA)/Solid Electrolyte Layer (30 µm)/First Anode Active Material Layer (27 µm, Si alloy Particles: CNT=9:1)/Second Anode Active Material Layer (7 µm, Ag-C)

An all-solid secondary battery was manufactured in the same manner as in Example 1, except that silicon-iron-copper-aluminum alloy (Si₇₅Fe_{9.}5Cu_{9.}5Al₆) particles (MK Electronics Co., Ltd.) having a D50 particle diameter of 4 µm were used instead of the silicon (Si) particles as the first anode active material. The silicon-iron-copper-aluminum (Si-Fe-Cu-Al) alloy particles included a silicon single phase, a silicon-iron alloy phase, a silicon-copper alloy phase, and the like. In the silicon-iron-copper-aluminum (Si-Fe-Cu-Al) alloy particles, the silicon single phase was surrounded by a silicon-iron alloy phase, a silicon-copper alloy phase, and the like.

### Example 4: Elastic Sheet (25 µm)/Cathode Layer (112 µm, NCA)/Solid Electrolyte Layer (30 µm)/First Anode Active Material Layer (27 µm, Lithiated Si alloy Particles: CNT=9:1)/Second Anode Active Material Layer (7 µm, Ag-C)

An all-solid secondary battery was in the same manner as in Example 1, except that lithiated silicon-iron-copper-aluminum alloy particles (MK Electronics Co., Ltd.) were used as the first anode active material instead of the silicon (Si) particles. The lithiated silicon-iron-copper-aluminum (Si-Fe-Cu-Al) alloy particles are obtained by lithiating the alloy particles used in Example 3.

### Reference Example 1: Elastic Sheet (100 µm)/Cathode Layer (112 µm, NCA)/Solid Electrolyte Layer (30 µm)/Second Anode Active Material Layer (7 µm, Ag-C)

An all-solid secondary battery was manufactured in the same manner as in Example 1, except that the thickness of the elastic sheet was changed to 100 µm the first anode active material layer was omitted and only the second anode active material layer was disposed.

### Reference Example 2: Elastic Sheet (50 µm)/Cathode Layer (112 µm, NCA)/Solid Electrolyte Layer (30 µm)/Second Anode Active Material Layer (7 µm, Ag-C)/First Anode Active Material Layer (27 µm, Si Particle: CNT=9:1)

An all-solid secondary battery was manufactured in the same manner as in Example 1, except that the arrangement order of the first anode active material layer and the second anode active material layer was changed to the reverse order.

A first anode active material layer was disposed on an anode current collector, a second anode active material layer was disposed on the first anode active material layer, and a solid electrolyte layer was disposed on the second anode active material layer.

### Example 5: Cathode Layer (113.8 µm, Li₂S-LiI-CNF)/Solid Electrolyte Layer (30 µm)/First Anode Active Material Layer (27 µm, Si Particles: CNT=9:1)/Second Anode Active Material Layer (7 µm, Ag-C)

An all-solid secondary battery was manufactured in substantially the same manner as in Example 1, except that the following cathode including a sulfide-based cathode active material was used and the elastic sheet was omitted.

### (Manufacture of Cathode)

The Li₂S-LiI-CNF composite prepared in Preparation Example 1 was prepared as a cathode active material. As a solid electrolyte, Li₆PS₅Cl, which is an argyrodite-type crystal, was prepared (D50=3.0 micrometer, crystalline). PTFE was prepared as a binder. These materials were mixed in a weight ratio of composite cathode active material:solid electrolyte:binder=60:40:1.2 to prepare a cathode mixture. The cathode mixture was obtained by mixing using a ball mill.

A cathode mixture was disposed on one side of a cathode current collector including an aluminum foil coated with carbon on one side thereof, and plate pressing was performed at a pressure of 200 MPa for 10 minutes to prepare a cathode. The total thickness of the cathode layer was about 113.8 µm. The thickness of the cathode active material layer was about 93.8 µm, and the thickness of the carbon-coated aluminum foil was about 20 µm.

### (Measurement of Initial Charge Capacity of Cathode Active Material Layer)

The initial charge capacity of the cathode layer was measured by the half-cell described above. The initial charge capacity of the cathode active material layer was measured by the half-cell.

### (Measurement of Initial Charge Capacity of Second Anode Active Material Layer)

An anode having a second anode active material layer/anode current collector structure was separately prepared in the same manner as described above, except that the first anode active material layer was omitted. For the separately prepared anode, the initial charge capacity of the second anode active material layer was measured. The initial charge capacity of the anode was measured by the half-cell described above. The initial charge capacity of the anode was measured in the same manner as in Example 1. The ratio (B/A) of the initial charge capacity (B) of the second anode active material layer to the initial charge capacity (A) of the cathode active material layer was less than 0.3. The initial charge capacity of the cathode active material layer was determined at a charge from the first open circuit voltage (1st open circuit voltage) to 2.8 V vs. Li/Li+. Initial charge capacities of the cathode layer (i.e., cathode active material layer) and the anode layer (i.e., second anode active material layer) were measured by the half-cell described above, respectively.

### Example 6: Cathode Layer (113.8 µm, Li₂S-LiI-CNF)/Solid Electrolyte Layer (30 µm)/First Anode Active Material Layer (27 µm, SiOx(0<x<2) Particle: CNT=9:1)/Second Anode Active Material Layer (7 µm, Ag-C)

An all-solid secondary battery was prepared in the same manner as in Example 5, except that silicon oxide SiOₓ (0<x<2) particles were used instead of the silicon (Si) particles as the first anode active material.

### Example 7: Cathode Layer (113.8 µm, Li₂S-LiI-CNF)/Solid Electrolyte Layer (30 µm)/First Anode Active Material Layer (27 µm, Si alloy Particles: CNT=9:1)/Second Anode Active Material Layer (7 µm, Ag-C)

An all-solid secondary battery was manufactured in the same manner as in Example 5, except that silicon-iron-copper-aluminum alloy (Si₇₅Fe_{9.}5Cu_{9.}5Al₆) particles (MK Electronics Co., Ltd.) having a D50 particle diameter of 4 µm were used instead of the silicon (Si) particles as the first anode active material. The silicon-iron-copper-aluminum (Si-Fe-Cu-Al) alloy particles included a silicon single phase, a silicon-iron alloy phase, a silicon-copper alloy phase, and the like. In the silicon-iron-copper-aluminum (Si-Fe-Cu-Al) alloy particles, the silicon single phase was surrounded by a silicon-iron alloy phase, a silicon-copper alloy phase, and the like.

### Example 8: Cathode Layer (113.8 µm, Li₂S-LiI-CNF)/Solid Electrolyte Layer (30 µm)/First Anode Active Material Layer (27 µm, Lithiated Si alloy Particles: CNT=9:1)/Second Anode Active Material Layer (7 µm, Ag-C)

An all-solid secondary battery was prepared in the same manner as in Example 5, except that lithiated silicon-iron-copper-aluminum alloy particles (MK Electronics Co., Ltd.) were used instead of the silicon (Si) particles as the first anode active material. The lithiated silicon-iron-copper-aluminum (Si-Fe-Cu-Al) alloy particles are obtained by lithiating the alloy particles used in Example 7.

### Reference Example 3: Elastic Sheet (50 µm)/Cathode Layer (113.8 µm, Li₂S-LiI-CNF)/Solid Electrolyte Layer (30 µm)/Second Anode Active Material Layer (7 µm, Ag-C)

An all-solid secondary battery was manufactured in the same manner as in Example 1, except that the cathode of Example 5 was used, the first anode active material layer was omitted, only the second anode active material layer was disposed, and the thickness of the elastic sheet was changed to 50 µm.

### Reference Example 4: Cathode Layer (113.8 µm, Li₂S-LiI-CNF)/Solid Electrolyte Layer (30 µm)/Second Anode Active Material Layer (7 µm, Ag-C)/First Anode Active Material Layer (27 µm, Si Particle: CNT=9:1)

An all-solid secondary battery was manufactured in the same manner as in Example 5, except that the arrangement order of the first anode active material layer and the second anode active material layer was changed to the reverse order.

A first anode active material layer was disposed on an anode current collector, a second anode active material layer was disposed on the first anode active material layer, and a solid electrolyte layer was disposed on the second anode active material layer.

### Evaluation Example 1-1: Evaluation of Volume Change During Charging and Discharging (NCA Cathode Active Material)

For the all-solid secondary batteries prepared in Example 1 and Reference Example 1, only the charging step of the first cycle was performed in the charging and discharging experiment of Evaluation Example 2 below, and then a change in thickness was observed by measuring a scanning electron microscope image of a cross-section of the all-solid secondary battery.

After the first charging cycle, a lithium metal layer was formed between the second anode active material layer and the anode current collector.

In the all-solid secondary battery of Example 1, the thickness of the lithium metal layer formed between the second anode active material layer and the anode current collector after initial charging was about 8 µm, which was smaller than the thickness (34 µm) of the first anode active material layer after charging.

The increase in thickness after initial charging of the all-solid secondary battery except for the elastic member of Example 1 was 10 % or less of the initial thickness of the all-solid secondary battery. As a result, the volume change was suppressed during the charging and discharging process of the all-solid secondary battery of Example 1.

In the all-solid secondary battery of Example 1, an elastic member having a thickness of 50 µm was used to accommodate a volume change during charging and discharging. As a result, the energy density of the all-solid secondary battery was partially reduced by including an elastic member having a thickness of 50 µm.

After initial charging of the all-solid secondary battery of Reference Example 1, the thickness of the lithium metal layer formed between the second anode active material layer and the anode current collector was about 30 µm, which was greater than the thickness (7 µm) of the second anode active material layer after charging.

The increase in thickness after initial charging of the all-solid secondary battery except for the elastic member of Reference Example 1 was more than 15 % of the initial thickness of the all-solid secondary battery. As a result, the volume change was remarkable during the charging and discharging process of the all-solid secondary battery of Reference Example 1.

In order to accommodate a volume change during charging and discharging in the all-solid secondary battery of Reference Example 1, an elastic member having a thickness of 100 µm was used. As a result, the energy density of the all-solid secondary battery was further reduced by including an elastic member having a thickness of 100 µm.

### Evaluation Example 1-2: Evaluation of Volume Change During Charging and Discharging (Li₂S-LiI-CNF Cathode Active Material)

For the all-solid secondary batteries prepared in Example 5 and Reference Example 3, only the charging step of the first cycle was performed in the charging and discharging experiment of Evaluation Example 2 below, and then a change in thickness was observed by measuring a scanning electron microscope image of a cross-section of the all-solid secondary battery.

After the first cycle charging, a lithium metal layer was formed between the second anode active material layer and the anode current collector.

In the all-solid secondary battery of Example 5, the thickness of the lithium metal layer formed between the second anode active material layer and the anode current collector after initial charging was about 8 µm, which was smaller than the thickness (34 µm) of the first anode active material layer after charging.

The increase in thickness after initial charging of the all-solid secondary battery of Example 5 was 9% or less of the initial thickness of the all-solid secondary battery. As a result, the volume change was insignificant during the charging and discharging process of the all-solid secondary battery of Example 5.

In the all-solid secondary battery of Example 5, an elastic member for accommodating a volume change during charging and discharging was not used. As a result, there was no decrease in the energy density of the all-solid secondary battery due to the elastic member.

After initial charging of the all-solid secondary battery prepared in Reference Example 3, the thickness of the lithium metal layer formed between the second anode active material layer and the anode current collector was about 30 µm, which was greater than the thickness (7 µm) of the second anode active material layer.

The increase in thickness after initial charging of the all-solid secondary battery except for the elastic member of Reference Example 3 was more than 15% of the initial thickness of the all-solid secondary battery. As a result, the volume change was remarkable during the charging and discharging process of the all-solid secondary battery of Reference Example 3.

In the all-solid secondary battery of Reference Example 3, an elastic member having a thickness of 50 µm was used to accommodate an increased volume change during charging and discharging. As a result, the energy density of the all-solid secondary battery was partially reduced by including an elastic member having a thickness of 50 µm.

### Evaluation Example 2: Charge-Discharge Test

The charge/discharge characteristics of the all-solid secondary batteries prepared in Examples 1 to 4 and Reference Examples 1 and 2 were evaluated by the following charge/discharge test. The charge/discharge test was performed by putting an all-solid secondary battery in a constant temperature bath of 45 °C.

The first cycle was charged at a constant current of 0.5 mA/cm2 for 12.5 hours until the battery voltage reached 4.25 V. Subsequently, the battery was discharged at a constant current of 0.5 mA/cm2 for 12.5 hours until the battery voltage reached 2.5 V.

Meanwhile, the charge/discharge characteristics of the all-solid secondary batteries prepared in Examples 5 to 8 and Reference Examples 3 to 4 were evaluated by the following charge/discharge test. The charge/discharge test was performed by putting an all-solid secondary battery in a constant temperature bath of 45 °C. The first cycle was charged with a constant current of 0.1 C for 12.5 hours until the battery voltage reached 2.8 V. Subsequently, discharging was performed at a constant current of 0.1 C for 12.5 hours until the battery voltage reached 0.3 V.

The discharge capacity of the first cycle was set as a standard capacity. After the first cycle, charging and discharging were performed up to 1250 cycles under the same conditions as in the first cycle. The measurement results are shown in Table 1 below.

The cycle number refers to the number of cycles required for the discharge capacity to decrease to 80% of the standard capacity after the first cycle. As the number of cycles increased, it was considered to have excellent life characteristics.

The initial efficiency is represented by Equation 1 below. <Equation 1> 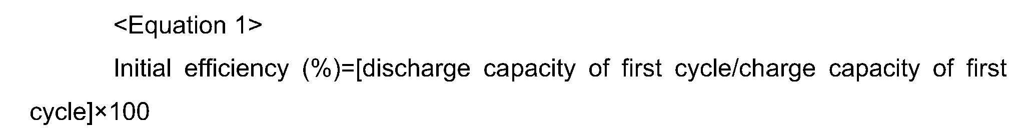 Initial efficiency (%)=[discharge capacity of first cycle/charge capacity of first cycle]×100

**[Table 1]**

| | Initial efficiency [%] | Cycle Count [times] |
|---|---|---|
| Example 1: Elastic Sheet (50 µm)/Cathode Layer (112 µm, NCA)/Solid Electrolyte Layer (30 µm)/First Anode Active Material Layer (27 µm, Si Particles: CNT=9:1)/Second Anode Active Material Layer (7 µm, Ag-C) | 86 | 800 |
| Example 2: Elastic Sheet (50 µm)/Cathode Layer (112 µm, NCA)/Solid Electrolyte Layer (30 µm)/First Anode Active Material Layer (27 µm, SiOₓ(0<x<2) Particle: CNT=9:1)/Second Anode Active Material Layer (7 µm, Ag-C) | 79 | 920 |
| Example 3: Elastic Sheet (50 µm)/Cathode Layer (112 µm, NCA)/Solid Electrolyte Layer (30 µm)/First Anode Active Material Layer (27 µm, Si alloy Particles: CNT=9:1)/Second Anode Active Material Layer (7 µm, Ag-C) | 89 | 1010 |
| Example 4: Elastic Sheet (25 µm)/Cathode Layer (112 µm, NCA)/Solid Electrolyte Layer (30 µm)/First Anode Active Material Layer (27 µm, Lithiated Si alloy Particles: CNT=9:1)/Second Anode Active Material Layer (7 µm, Ag-C) | 97 | 1200 |
| Reference Example 1: Elastic Sheet (100 µm)/Cathode Layer (112 µm, NCA)/Solid Electrolyte Layer (30 µm)/Second Anode Active Material Layer (7 µm, Ag-C) | 85 | 400 |
| Reference Example 2: Elastic Sheet (100 µm)/Cathode Layer (112 µm, NCA)/Solid Electrolyte Layer (30 µm)/Second Anode Active Material Layer (7 µm, Ag-C)/First Anode Active Material Layer (27 µm, Si Particle: CNT=9:1) | 84 | 280 |
| Example 5: Cathode Layer (113.8 µm, Li₂S-LiI-CNF)/Solid Electrolyte Layer (30 µm)/First Anode Active Material Layer (27 µm, Si Particles: CNT=9:1)/Second Anode Active Material Layer (7 µm, Ag-C) | 84 | 700 |
| Example 6: Cathode Layer (113.8 µm, Li₂S-LiI-CNF)/Solid Electrolyte Layer (30 µm)/First Anode Active Material Layer (27 µm, SiOx(0<x<2) Particle: CNT=9:1)/Second Anode Active Material Layer (7 µm, Ag-C) | 77 | 620 |
| Example 7: Cathode Layer (113.8 µm, Li₂S-LiI-CNF)/Solid Electrolyte Layer (30 µm)/First Anode Active Material Layer (27 µm, Si alloy Particles: CNT=9:1)/Second Anode Active Material Layer (7 µm, Ag-C) | 87 | 820 |
| Example 8: Cathode Layer (113.8 µm, Li₂S-LiI-CNF)/Solid Electrolyte Layer (30 µm)/First Anode Active Material Layer (27 µm, Lithiated Si alloy Particles: CNT=9:1)/Second Anode Active Material Layer (7 µm, Ag-C) | 96 | 980 |
| Reference Example 3: Elastic Sheet (50 µm)/Cathode Layer (113.8 µm, Li₂S-LiI-CNF)/Solid Electrolyte Layer (30 µm)/Second Anode Active Material Layer (7 µm, Ag-C) | 83 | 300 |
| Reference Example 4: Cathode Layer (113.8 µm, Li2S-LiI-CNF)/Solid Electrolyte Layer (30 µm)/Second Anode Active Material Layer (7 µm, Ag-C)/First Anode Active Material Layer (27 µm, Si Particle: CNT=9:1) | 77 | 120 |

As shown in Table 1, the all-solid secondary batteries of Examples 1 to 4 showed improved initial efficiency and lifespan characteristics compared to the all-solid secondary battery of Reference Example 1 due to the suppressed volume change and the suppressed increase in internal resistance during charging and discharging. It was determined that the all-solid secondary batteries of Examples 1 to 4 suppressed a volume change during charging and discharging by including the first anode active material layer having a relatively dense structure, and improved uniformity of an electrode reaction by removing voids present in the second anode active material layer. The all-solid secondary batteries of Examples 1 to 4 had a structure of solid electrolyte layer/first anode active material layer/second anode active material layer/anode current collector, and exhibited improved initial efficiency and lifespan characteristics compared to the all-solid secondary battery of Reference Example 2 having a reverse arrangement order.

As shown in Table 1, the all-solid-state secondary batteries of Examples 5 to 8 showed improved initial efficiency and lifespan characteristics compared to the all-solid secondary battery of Reference Example 3 due to the suppressed volume change and the suppressed increase in internal resistance during charging and discharging. It was determined that the all-solid secondary batteries of Examples 5 to 8 suppressed a volume change during charging and discharging by including the first anode active material layer having a relatively dense structure, and improved uniformity of an electrode reaction by removing voids present in the second anode active material layer.

The all-solid secondary batteries of Examples 5 to 8 had a structure of solid electrolyte layer/first anode active material layer/second anode active material layer/anode current collector, and had improved initial efficiency and lifespan characteristics compared to the all-solid secondary battery of Reference Example 4 having an arrangement order opposite thereto.

In the all-solid secondary batteries of Reference Examples 1, 2, and 3, the energy density of the all-solid secondary battery was lowered due to the addition of a thick elastic sheet.

### Evaluation Example 3: Evaluation of High-Rate Characteristics

High-rate characteristics of the all-solid secondary batteries of Examples 1 to 4 and Reference Examples 1 and 2 were evaluated by the following charge/discharge test. The charge/discharge test was performed by putting a solid secondary battery in a constant temperature bath of 45 °C.

The all-solid secondary batteries of Examples 1 to 4 and Reference Examples 1 and 2 were charged at a constant current of 0.1 C rate at 45 °C until the voltage reached 3.9 V (vs. Li), and then cut-off at a current of 0.05 C rate while maintaining 3.9 V in a constant voltage mode. Subsequently, the all-solid secondary batteries were discharged at a constant current of 0.1 C rate until the voltage reached 2.5 V (vs. Li) during the discharge (formation cycle).

The all-solid secondary batteries that had undergone the formation cycle were charged with a constant current at a current of 0.2 C rate at 45°C until the voltage reached 3.9 V (vs. Li). Subsequently, during discharging, the all-solid secondary batteries were discharged at a constant current of 0.2 C rate until the voltage reached 2.5 V (vs. Li) (first cycle).

The all-solid secondary batteries that passed through the first cycle were charged with a constant current at a current of 0.2 C rate at 45°C until the voltage reached 3.9 V (vs. Li). Subsequently, during discharging, the all-solid secondary batteries were discharged at a constant current of 0.33 C rate until the voltage reached 2.5 V (vs. Li) (second cycle).

The all-solid secondary battery that passed through the second cycle was charged with a constant current at a current of 0.2 C rate at 45°C until the voltage reached 3.9 V (vs. Li). Subsequently, during discharging, the all-solid secondary batteries were discharged at a constant current of 0.5 C rate until the voltage reached 2.5 V (vs. Li) (third cycle).

The all-solid secondary batteries that passed through the third cycle were charged with a constant current at a current of 0.2 C rate at 45°C until the voltage reached 3.9 V (vs. Li). Subsequently, during discharging, the all-solid secondary batteries were discharged at a constant current of 1.0 C rate until the voltage reached 2.5 V (vs. Li) (fourth cycle).

In all charge/discharge cycles, a 10-minute stop time was provided after one charge/discharge cycle. A part of the room-temperature charge/discharge experiment results is shown in Table 2 below. The high-rate characteristic is defined by Equation 2 below.

Meanwhile, the high-rate characteristics of the all-solid secondary batteries of Examples 5 to 8 and Reference Examples 3 to 4 were evaluated by the following charge-discharge test. The charge/discharge test was performed by putting a solid secondary battery in a constant temperature bath of 45 °C.

The all-solid secondary batteries of Examples 5 to 8 and Reference Examples 3 to 4 were charged at a constant current of 0.1 C rate at 45 °C until the voltage reached 2.5 V (vs. Li), and then cut-off at a current of 0.05 C rate while maintaining 2.5 V in a constant voltage mode. Subsequently, the all-solid secondary batteries were discharged at a constant current of 0.1 C rate until the voltage reached 0.3 V (vs. Li) during the discharge (formation cycle).

The all-solid secondary batteries that had undergone the formation cycle were charged with a constant current at a current of 0.2 C rate at 45°C until the voltage reached 2.5 V (vs. Li). Subsequently, during discharging, the all-solid secondary batteries were discharged at a constant current of 0.2 C rate until the voltage reached 0.3 V (vs. Li) (first cycle).

The all-solid secondary batteries that passed through the first cycle were charged with a constant current at a current of 0.2 C rate at 45°C until the voltage reached 2.5 V (vs. Li). Subsequently, during discharging, the all-solid secondary batteries were discharged at a constant current of 0.33 C rate until the voltage reached 0.3 V (vs. Li) (second cycle).

The all-solid secondary batteries that passed through the second cycle were charged with a constant current at a current of 0.2 C rate at 45°C until the voltage reached 2.5 V (vs. Li). Subsequently, during discharging, the all-solid secondary batteries were discharged at a constant current of 0.5 C rate until the voltage reached 0.3 V (vs. Li) (third cycle).

The all-solid secondary batteries that passed through the third cycle were charged with a constant current at a current of 0.2 C rate at 45°C until the voltage reached 2.5 V (vs. Li). Subsequently, during discharging, the all-solid secondary batteries were discharged at a constant current of 1.0 C rate until the voltage reached 0.3 V (vs. Li) (fourth cycle).

In all charge/discharge cycles, a 10-minute stop time was provided after one charge/discharge cycle. A part of the room-temperature charge/discharge experiment results is shown in Table 2 below. The high-rate characteristic is defined by Equation 2 below. <Equation 2> 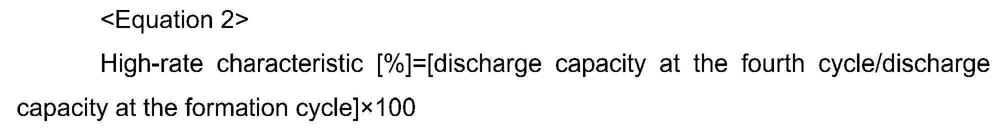 High-rate characteristic [%]=[discharge capacity at the fourth cycle/discharge capacity at the formation cycle]×100

**[Table 2]**

| | High Rate Characteristics (1C/0.1C) [%] |
|---|---|
| Example 1: Elastic Sheet (50 µm)/Cathode Layer (112 µm, NCA)/Solid Electrolyte Layer (30 µm)/First Anode Active Material Layer (27 µm, Si Particles: CNT=9:1)/Second Anode Active Material Layer (7 µm, Ag-C) | 94 |
| Example 2: Elastic Sheet (50 µm)/Cathode Layer (112 µm, NCA)/Solid Electrolyte Layer (30 µm)/First Anode Active Material Layer (27 µm, SiOₓ(0<x<2) Particle: CNT=9:1)/Second Anode Active Material Layer (7 µm, Ag-C) | 88 |
| Example 3: Elastic Sheet (50 µm)/Cathode Layer (112 µm, NCA)/Solid Electrolyte Layer (30 µm)/First Anode Active Material Layer (27 µm, Si alloy Particles: CNT=9:1)/Second Anode Active Material Layer (7 µm, Ag-C) | 95 |
| Example 4: Elastic Sheet (25 µm)/Cathode Layer (112 µm, NCA)/Solid Electrolyte Layer (30 µm)/First Anode Active Material Layer (27 µm, Lithiated Si alloy Particles: CNT=9:1)/Second Anode Active Material Layer (7 µm, Ag-C) | 95.6 |
| Reference Example 1: Elastic Sheet (100 µm)/Cathode Layer (112 µm, NCA)/Solid Electrolyte Layer (30 µm)/Second Anode Active Material Layer (7 µm, Ag-C) | 90 |
| Reference Example 2: Elastic Sheet (100 µm)/Cathode Layer (112 µm, NCA)/Solid Electrolyte Layer (30 µm)/Second Anode Active Material Layer (7 µm, Ag-C)/First Anode Active Material Layer (27 µm, Si Particle: CNT=9:1) | 85 |
| Example 5: Cathode Layer (113.8 µm, Li₂S-LiI-CNF)/Solid Electrolyte Layer (30 µm)/First Anode Active Material Layer (27 µm, Si Particles: CNT=9:1)/Second Anode Active Material Layer (7 µm, Ag-C) | 87 |
| Example 6: Cathode Layer (113.8 µm, Li₂S-LiI-CNF)/Solid Electrolyte Layer (30 µm)/First Anode Active Material Layer (27 µm, SiOx(0<x<2) Particle: CNT=9:1)/Second Anode Active Material Layer (7 µm, Ag-C) | 83 |
| Example 7: Cathode Layer (113.8 µm, Li₂S-LiI-CNF)/Solid Electrolyte Layer (30 µm)/First Anode Active Material Layer (27 µm, Si alloy Particles: CNT=9:1)/Second Anode Active Material Layer (7 µm, Ag-C) | 88 |
| Example 8: Cathode Layer (113.8 µm, Li2S-LiI-CNF)/Solid Electrolyte Layer (30 µm)/First Anode Active Material Layer (27 µm, Lithiated Si alloy Particles: CNT=9:1)/Second Anode Active Material Layer (7 µm, Ag-C) | 90.2 |
| Reference Example 3: Elastic Sheet (50 µm)/Cathode Layer (113.8 µm, Li2S-LiI-CNF)/Solid Electrolyte Layer (30 µm)/Second Anode Active Material Layer (7 µm, Ag-C) | 80 |
| Reference Example 4: Cathode Layer (113.8 µm, Li2S-LiI-CNF)/Solid Electrolyte Layer (30 µm)/Second Anode Active Material Layer (7 µm, Ag-C)/First Anode Active Material Layer (27 µm, Si Particle: CNT=9:1) | 78 |

As shown in Table 2, the all-solid secondary batteries of Examples 1 and 3 to 4 had improved high-rate characteristics compared to the all-solid secondary batteries of Reference Examples 1 and 2.The all-solid secondary battery of Example 2 had improved high-rate characteristics compared to the all-solid secondary battery of Reference Example 2.

It was determined that the all-solid secondary batteries of Examples 1 and 3 to 4 had a structure of solid electrolyte layer/first anode active material layer/second anode active material layer, thereby improving high-rate characteristics.

As shown in Table 2, the all-solid secondary batteries of Examples 5 to 8 had improved high-rate characteristics compared to the all-solid secondary batteries of Reference Examples 3 and 4.

It was determined that the all-solid secondary batteries of Examples 5 to 8 had a structure of solid electrolyte layer/first anode active material layer/second anode active material layer, thereby improving high-rate characteristics.

In the all-solid secondary batteries of Reference Examples 1, 2, and 3, the energy density of the all-solid secondary battery was lowered due to the addition of a thick elastic sheet.

**List of Reference Numerals for Major Elements**

| | | | | | |
|---|---|---|---|---|---|
| 1 | All-Solid Secondary Battery | 10 | Cathode | | |
| 11 | Positive Current Collector | 12 | Cathode Active Material Layer | | |
| 20 | Anode | 21 | Anode Current Collector | | |
| 22 | First Anode Active Material Layer | 23 | Second Anode Active Material Layer | | |
| 24 | Thin Film | 25 | Fourth Anode Active Material Layer | | |
| 30 | Solid Electrolyte Layer | 40 | First Inactive Member | 40a, 40b | First inactive member |
| 50 | Second Inactive Member | | | | |

### Industrial Availability

According to an aspect, provided is an all-solid secondary battery having a multilayer structure that includes a first anode active material layer and a second anode active material layer, wherein the first anode active material layer is disposed adjacent to a solid electrolyte layer, whereby a volume change during charging and discharging is suppressed and improved charge-discharge characteristics are obtained.

## Claims

1. An all-solid secondary battery comprising:
a cathode layer; an anode layer; and a solid electrolyte layer between the cathode layer and the anode layer,
wherein the cathode layer comprises a cathode current collector and a cathode active material layer on one side of the cathode current collector,
the cathode active material layer comprises a cathode active material and a sulfide-based solid electrolyte,
the anode layer comprises: an anode current collector and a first anode active material layer between the anode current collector and the solid electrolyte layer;
a second anode active material layer between the first anode active material layer and the anode current collector,
the first anode active material layer comprises a first anode active material capable of forming an alloy or compound with lithium and a fibrous carbon-based material,
the first anode active material comprises a metal, a metal oxide, an alloy phase, or a combination thereof, and
the second anode active material layer comprises a second anode active material.

2. The all-solid secondary battery of claim 1, wherein the metal comprises silicon (Si), gold (Au), platinum (Pt), palladium (Pd), silver (Ag),
aluminum (Al), bismuth (Bi), tin (Sn), zinc (Zn), or a combination thereof, the metal oxide comprises silicon oxide represented by SiOₓ (0<x≤2), tin oxide represented by SnOₓ (0<x≤2), or a combination thereof,
the first anode active material including the alloy phase comprises silicon (Si), iron (Fe), and a first metal, and
the first metal comprises copper (Cu), aluminum (Al), titanium (Ti),
chromium (Cr), manganese (Mn), cobalt (Co), nickel (Ni), zirconium (Zr), niobium (Nb), molybdenum (Mo), tin (Sn), cerium (Ce), or a combination thereof.

3. The all-solid secondary battery of claim 2, wherein the first anode active material including the alloy phase comprises 60 to 90 at% of silicon (Si) based on a total of 100 at% of the first anode active material including the alloy phase,
more than 0 to 30 at% of iron (Fe) based on a total of 100 at% of the first anode active material including the alloy phase,
the first anode active material including the alloy phase comprises a silicon single phase, an alloy phase of silicon and iron, an alloy phase of silicon and a first metal, an alloy phase of iron and a first metal, an alloy phase of a plurality of first metals, or a combination thereof, and
the alloy phase of silicon and iron comprises FeSi₂, Fe₂Si₅, FeSi, or a combination thereof.

4. The all-solid secondary battery of claim 2, wherein the first anode active material including the alloy phase is a lithiated anode active material.

5. The all-solid secondary battery of claim 1, wherein the first anode active material is in the form of particles, and a size of the first anode active material is 0.1 to 20 µm.

6. The all-solid secondary battery of claim 1, wherein an aspect ratio of the fibrous carbon-based material is 10 or more, and
the fibrous carbon-based material comprises an amorphous fibrous carbon-based material, a crystalline fibrous carbon-based material, or a combination thereof.

7. The all-solid secondary battery of claim 1, wherein the fibrous carbon-based material comprises a fibrous carbon nanostructure, and
the fibrous carbon nanostructure comprises a carbon nanotube, a carbon nanofiber, a carbon nanobelt, a carbon nanorod, or a combination thereof.

8. The all-solid secondary battery of claim 1, wherein the first anode active material layer further comprises a binder, and
the binder comprises a polymer binder, and the binder comprises a fluorine-based binder.

9. The all-solid secondary battery of claim 1, wherein the first anode active material layer further comprises a second anode active material, and the second anode active material has a concentration gradient increasing in a thickness direction of the first anode active material layer and the second anode active material layer from a region adjacent to the solid electrolyte layer to a region adjacent to the anode current collector.

10. The all-solid secondary battery of claim 1, further comprising a third anode active material layer,
wherein the third anode active material layer is disposed between the first anode active material layer and the second anode active material layer,
the third anode active material layer comprises the first anode active material, the second anode active material, and a fibrous carbon-based material, and
the second anode active material has a concentration gradient increasing in a thickness direction of the first anode active material layer, the third anode active material layer, and the second anode active material layer from a region adjacent to the solid electrolyte layer to a region adjacent to the anode current collector.

11. The all-solid secondary battery of claim 1, wherein the second anode active material is in a particle form, and a size of the second anode active material is less than 1 µm,
the second anode active material comprises a carbon-based anode active material, a second metal-based anode active material distinguished from the first anode active material, or a combination thereof,
the carbon-based anode active material comprises amorphous carbon, crystalline carbon, porous carbon, or a combination thereof, and
the second metal-based anode active material comprises gold (Au), platinum (Pt), palladium (Pd), silver (Ag), aluminum (Al), bismuth (Bi), tin (Sn), zinc (Zn), or a combination thereof.

12. The all-solid secondary battery of claim 1, wherein the second anode active material comprises a mixture of first particles comprising amorphous carbon and second particles comprising a second metal-based anode active material, and
an amount of the second particles is 1 to 60 wt% based on a total weight of the mixture.

13. The all-solid secondary battery of claim 1, wherein the second anode active material comprises a composite anode active material,
the composite anode active material comprises a carbon-based support and a third metal-based anode active material supported on the carbon-based support,
the third metal-based anode active material has a particle shape, and a particle diameter of the third metal-based anode active material is 1 nm to 200 nm, and
the carbon-based support is in a particle form, and a particle diameter of the carbon-based support is 10 nm to 2 µm.

14. The all-solid secondary battery of claim 1, wherein a ratio (B/A) of an initial charge capacity (B) of the second anode active material layer to an initial charge capacity (A) of the cathode active material layer is 0.01 to 0.45,
a thickness of the second anode active material layer is less than a thickness of the first anode active material layer,
a thickness of the second anode active material layer is 50 % or less of a thickness of the first anode active material layer, and
a thickness of the second anode active material layer is 1 to 50 µm.

15. The all-solid secondary battery of claim 1, further comprising a fourth anode active material layer,
wherein the fourth anode active material layer is disposed between the anode current collector and the first anode active material layer, and the fourth anode active material layer is a metal layer, and the metal layer comprises lithium or a lithium alloy.

16. The all-solid secondary battery of claim 1, wherein the cathode active material layer comprises a cathode active material,
the cathode active material comprises a sulfide-based cathode active material, an oxide-based cathode active material, or a combination thereof,
the sulfide-based cathode active material comprises nickel sulfide, copper sulfide, Li₂S, a Li₂S-containing composite, or a combination thereof, and
the oxide-based cathode active material comprises a lithium transition metal oxide, a metal oxide, or a combination thereof, the lithium transition metal oxide comprises lithium cobalt oxide, lithium nickel oxide, lithium nickel cobalt oxide, lithium nickel cobalt aluminum oxide, lithium nickel cobalt manganese oxide, lithium manganese oxide, lithium iron phosphate, or a combination thereof, and the lithium oxide comprises iron oxide, vanadium oxide, or a combination thereof.

17. The all-solid secondary battery of claim 1, wherein the cathode active material layer further comprises one or more selected from a conductive material and a binder, and
the conductive material comprises a carbon-based conductive material.

18. The all-solid secondary battery of claim 1, wherein the solid electrolyte layer comprises a solid electrolyte or a combination of a solid electrolyte and a gel electrolyte,
the solid electrolyte comprises a sulfide-based solid electrolyte, an oxide-based solid electrolyte, a polymer solid electrolyte, or a combination thereof,
the gel electrolyte comprises a polymer gel electrolyte,
the sulfide-based solid electrolyte is one or more selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).
the sulfide-based solid electrolyte comprises an argyrodite-type solid electrolyte,
the argyrodite-type solid electrolyte comprises one or more selected from Li₆PS₅Cl, Li₆PS₅Br, and Li₆PS₅I, and
a density of the argyrodite-type solid electrolyte is 1.5 to 2.0 g/cc.

19. The all-solid secondary battery of claim 1, wherein one or more of the cathode current collector and the anode current collector comprise a base film and a metal layer disposed on one side or opposite sides of the base film,
the base film comprises a polymer, and the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

20. The all-solid secondary battery of claim 1, further comprising a first inactive member disposed on one or more of the other side of the cathode current collector and the other side of the anode current collector, wherein
the first inactive member is an elastic member.
